# EUROPÄISCHE PATENTANMELDUNG

(11) **EP 3 297 392 A2**
(43) Veröffentlichungstag der Anmeldung: **21.03.2018**
(21) Anmeldenummer: 17184258.6
(22) Anmeldetag: 01.08.2017
(51) Int. Cl.: H04W 88/08

(54) **STEUERUNGSSYSTEM**

(30) Priorität: 14.09.2016 DE 102016011153
(71) Anmelder: KATHREIN-Werke KG, 83022 Rosenheim (DE)
(72) Erfinder: Mohr, Markus, 83022 Rosenheim (DE); Schmid, Johann, 83083 Riedering (DE)
(74) Vertreter: Behr, Wolfgang

(57) **Zusammenfassung**

Die vorliegende Anmeldung betrifft ein Steuerungssystem mit einem Master, mindestens einem Slave und einem zwischen dem Master und dem mindestens einen Slave angeordneten Kommunikationsmodul, über welches der Master und der mindestens eine Slave kommunizieren, wobei der Master Steuerbefehle zum Ansteuern des mindestens einen Slave versendet und der mindestens eine Slave auf die Steuerbefehle des Master antwortet, wobei das Kommunikationsmodul die Steuerbefehle und die Antworten jeweils weiterleitet, wobei der Master an das Kommunikationsmodul in einem oder mehreren Requests mindestens einen Steuerbefehl und mindestens eine zugehörige Timing-Anforderung übermittelt, wobei das Kommunikationsmodul den oder die mehreren Requests verarbeitet, indem es den mindestens einen Steuerbefehl gemäß der mindestens einen Timing-Anforderung an den mindestens einen Slave sendet, und/oder dass das Kommunikationsmodul Timing-Informationen bezüglich der Kommunikation mit dem mindestens einen Slave aufnimmt und an den Master sendet.

## Beschreibung

Die vorliegende Erfindung betrifft ein Steuerungssystem mit einem Master, mindestens einem Slave und einem zwischen dem Master und dem mindestens einen Slave angeordneten Kommunikationsmodul, über welches der Master und der mindestens eine Slave kommunizieren, wobei der Master Steuerbefehle zum Ansteuern des mindestens einen Slave versendet und der mindestens eine Slave auf die Steuerbefehle des Master antwortet, wobei das Kommunikationsmodul die Steuerbefehle und die Antworten jeweils weiterleitet.

Als zwischen Master und Slaves angeordnete Kommunikationsmodule sind Relays bekannt, welche die zwischen dem Master und dem Slave ausgetauschten Daten lediglich weiterleiten und bspw. der Verstärkung des physikalischen Signals dienen.

Steuerungssysteme aus einem Master und einem oder einer Mehrzahl von Slaves sind in vielen Bereichen der Technik üblich. Beispielsweise können solche Steuerungssysteme zur Ansteuerung von Komponenten einer Mobilfunkantenne dienen. Dabei kann der Master die Ansteuerung von Antennen und/oder Antenna Line Devices als Slaves übernehmen.

In vielen Bereichen werden für die Kommunikation zwischen Master und Slaves jedoch hohe Anforderungen an die Latenzen gestellt. Dies ist insbesondere auch bei Antennenanlagen der Fall. Daher war es gemäß dem Stand der Technik notwendig, den Master relativ nahe an den Slaves zu positionieren, um die geforderten Latenzen einzuhalten. Daher war es bspw. bei Mobilfunkantennensystemen bisher erforderlich, aufwendige Master-Applikationen dezentral nahe an der Antenne bspw. im Bereich der Mobilfunkbasisstation anzuordnen. Hierdurch wird eine zentrale Steuerung eines Kommunikationssystems, welches eine Vielzahl von Antennen umfasst, erschwert.

Aufgabe der vorliegenden Erfindung ist es daher, ein Steuerungssystem zur Verfügung zu stellen, bei welchem der Master nicht mehr in der Nähe der Slaves angeordnet sein muss.

Diese Aufgabe wird durch die Steuerungssysteme gemäß den unabhängigen Ansprüchen 1 und 9 gelöst. Bevorzugte Ausgestaltungen der vorliegenden Erfindung sind Gegenstand der Unteransprüche.

Die vorliegende Erfindung umfasst in einem ersten Aspekt ein Steuerungssystem mit einem Master, mindestens einem Slave und einem zwischen dem Master und dem mindestens einen Slave angeordneten Kommunikationsmodul, über welches der Master und der mindestens eine Slave kommunizieren, wobei der Master Steuerbefehle zum Ansteuern des mindestens einen Slave versendet und der mindestens eine Slave auf die Steuerbefehle des Masters antwortet, wobei das Kommunikationsmodul die Steuerbefehle und die Antworten jeweils weiterleitet. Dabei ist erfindungsgemäß in einer ersten Variante vorgesehenen, dass der Master an das Kommunikationsmodul in einem oder mehreren Requests mindestens einen Steuerbefehl und mindestens eine zugehörige Timing-Anforderung übermittelt, welche das Kommunikationsmodul verarbeitet, indem es den mindestens einen Steuerbefehl gemäß der mindestens einen Timing-Anforderung an den mindestens einen Slave weiterleitet. In einer zweiten Variante des ersten Aspekts ist vorgesehen, dass das Kommunikationsmodul Timing-Informationen bezüglich der Kommunikation mit dem mindestens einen Slave aufnimmt und an den Master sendet.

Die erste und die zweite Variante des ersten Aspekts der vorliegenden Erfindung können jeweils für sich genommen und unabhängig voneinander eingesetzt werden. Besonders bevorzugt kommen sie jedoch in Kombination zum Einsatz.

Durch den erfindungsgemäßen Einsatz von Timing-Anforderungen, welche vom Master an das Kommunikationsmodul übertragen werden und dessen Zeitverhalten bestimmen, kommt es für die in zeitlicher Hinsicht ordnungsgemäße Abwicklung der Kommunikation zwischen Master und Slaves nur noch auf die Latenzen zwischen Kommunikationsmodul und Slaves an, nicht mehr aber auf die Latenzen zwischen dem Master und dem Kommunikationsmodul. In gleicher Weise erlaubt die Übertragung von Timing-Informationen unabhängig von etwaigen Latenzen in der Kommunikation zwischen Kommunikationsmodul und Master eine Überwachung des Zeitverhaltens der Slaves. Hierdurch kann der Master entfernt von den Slaves angeordnet werden und/oder über Kommunikationsverbindungen mit einer undefinierten oder großen Latenz mit dem Kommunikationsmodul in Verbindung stehen.

Insbesondere kann der Master mit dem Kommunikationsmodul über eine Kommunikationsverbindung mit einer höheren und/oder undefinierten Latenz in Verbindung stehen. Für das Zeitverhalten des Systems ist in diesem Fall ausreichend, wenn das Kommunikationsmodul mit dem mindestens einen Slave über eine Kommunikationsverbindung mit einer niedrigeren und/oder definierten Latenz in Verbindung steht.

Weiterhin kann der Master mit dem Kommunikationsmodul über ein Netzwerk kommunizieren.

Im Folgenden werden nun zunächst bevorzugte Ausgestaltungen eines Steuerungssystems gemäß der ersten Variante der vorliegenden Erfindung dargestellt:
In einer möglichen Ausführungsform kann mindestens ein Steuerbefehl zusammen mit mindestens einer zugehörigen Timing-Anforderung in einem einzigen Request des Masters enthalten sein. Bspw. kann ein Request dabei zwei oder mehr Steuerbefehle zusammen mit einer zugehörigen Timing-Anforderung umfassen. Insbesondere kann der Request sämtliche zu dem mindestens einen Steuerbefehl zugehörigen Timing-Anforderungen und/oder sämtliche zu der mindestens einen Timing-Anforderung gehörigen Steuerbefehle umfassen.

Alternativ können der mindestens eine Steuerbefehl und die zugehörige mindestens eine Timing-Anforderung in separaten Requests von dem Master an das Kommunikationsmodul übermittelt werden. Weiterhin ist es denkbar, mehrere Steuerbefehle oder mehrere Timing-Anforderungen in separaten Requests von dem Master an das Kommunikationsmodul zu übermitteln. Die Informationen, welche gemäß der ersten Ausführungsform in einem Request vom Master übermittelt werden, werden also auf zwei oder mehr Requests aufgeteilt.

Bevorzugt weisen der Master und das Kommunikationsmodul jeweils eine Verknüpfungsfunktion auf, welche es dem Master ermöglicht zu signalisieren und dem Kommunikationsmodul ermöglicht zu erkennen, dass die separaten Requests zusammen gehören. Insbesondere können die Requests Verknüpfungsinformationen und/oder Identifikationsinformationen, bspw. eine ID enthalten, welche dem Kommunikationsmodul signalisieren, dass mit den separaten Requests zusammengehörige Steuerbefehle und/der Timing-Anforderungen übermittelt werden. Bevorzugt verarbeitet das Kommunikationsmodul verknüpfte Requests erst dann weiter, wenn alle verknüpften Requests vom Master eingetroffen sind.

In einer bevorzugten Ausgestaltung ist vorgesehen, dass der Master in einem oder mehreren Requests mindestens zwei Steuerbefehle und eine zugehörige Timing-Anforderung an das Kommunikationsmodul versendet, wobei das Kommunikationsmodul die beiden Steuerbefehle nacheinander gemäß der Timing-Anforderung an mindestens einen Slave sendet. Insbesondere kann das Kommunikationsmodul die beiden Steuerbefehle nacheinander mit einem der Timing-Anforderung entsprechenden zeitlichen Abstand und/oder in einer der Timing-Anforderung entsprechenden zeitlichen Abfolge an den mindestens einen Slave senden. Insbesondere ist daher für das Absenden des zweiten Steuerbefehls kein weiterer Request mehr notwendig. Vielmehr versendet das Kommunikationsmodul den zweiten Steuerbefehl selbsttätig gemäß der Timing-Anforderung. Dies ermöglicht unabhängig von der Latenz zwischen dem Master und dem Kommunikationsmodul eine Versendung zweier Steuerbefehle gemäß der Timing-Anforderung.

Bevorzugt stellt das Kommunikationsmodul selbsttätig sicher, dass die Timing-Anforderung eingehalten wird, indem das zweite Steuersignal rechtzeitig abgesetzt wird. Dabei kann das Kommunikationsmodul die Zeit für die Kommunikation mit dem Slave auswerten und die Steuerbefehle gemäß der Timing-Anforderung absetzten.

In einer möglichen Ausführungsform umfasst der Request oder umfassen die mehreren Requests einen ersten Steuerbefehl an einen ersten Slave, einen zweiten Steuerbefehl an einen zweiten Slave und die Timing-Anforderung, wobei das Kommunikationsmodul nach Erhalt des Requests oder mindestens eines und bevorzugt aller der mehreren Requests den ersten Steuerbefehl an den ersten Slave versendet und nach einer der Timing-Anforderung entsprechenden Zeitspanne und/oder in einer der Timing-Anforderung entsprechenden zeitlichen Abfolge und/oder aufgrund einer der Timing-Anforderung entsprechenden Bedingung den zweiten Steuerbefehl an den zweiten Slave sendet.

In einer alternativen Ausführungsform können die beiden Steuerbefehle jedoch auch zur Ansteuerung eines einzigen Slaves dienen.

In einer möglichen Ausgestaltung der vorliegenden Erfindung ist vorgesehen, dass die Timing-Anforderung den zeitlichen Abstand zwischen dem Versenden zweier Steuerbefehle durch das Kommunikationsmodul und/oder den zeitlichen Abstand zwischen dem Erhalt einer Antwort von einem Slave und dem Versenden eines Steuerbefehls durch das Kommunikationsmodul betrifft.

Der Master kann neben Requests, welche mindestens einen Steuerbefehl und mindestens eine Timing-Anforderung umfassen oder zur Übertragung mindestens eines Steuerbefehl und mindestens einer Timing-Anforderung verknüpft sind, auch Requests an das Kommunikationsmodul senden, welche nur einen Steuerbefehl und keine Timing-Anforderung umfassen und auch nicht verknüpft sind, und welche das Kommunikationsmodul veranlassen, den Steuerbefehl unmittelbar an den mindestens einen Slave weiter zu leiten.

Im Folgenden werden nun bevorzugte Ausgestaltungen eines Steuerungssystems gemäß der zweiten Variante der vorliegenden Erfindung dargestellt:
In einer bevorzugten Ausgestaltung der zweiten Variante ist vorgesehen, dass das Kommunikationsmodul die Zeitdifferenz zwischen dem Versenden eines Steuerbefehls an einen Slave und der Erhalt einer Antwort bestimmt und an den Master sendet.

Alternativ oder zusätzlich kann das Kommunikationsmodul die Sendezeit beim Versenden eines Steuerbefehls an einen Slave und/oder die Empfangszeit einer Antwort bestimmen und an den Master senden.

Bevorzugt sendet das Kommunikationsmodul die Timing-Information und insbesondere die Zeitdifferenz, Sendezeit und/oder Empfangszeit zusammen mit der Antwort des Slaves an den Master.

Bevorzugte Ausgestaltungen der vorliegenden Erfindung, welche sowohl bei einem Steuerungssystem gemäß der ersten, als auch bei einem Steuerungssystem gemäß der zweiten Variante zum Einsatz kommen können, werden im Folgenden beschrieben:
Die Kommunikation zwischen dem Master und allen an den Master angeschlossenen Slaves kann so erfolgen, dass nur der Master die Kommunikation initiieren kann, während die Slaves darauf warten, von dem Master angesprochen zu werden.

Bei der Kommunikation zwischen dem Master und den an den Master angeschlossenen Slaves kann es sich um eine serielle Kommunikation handeln.

In einer möglichen Ausgestaltung der vorliegenden Erfindung bestätigt das Kommunikationsmodul den Erhalt eines oder mehrerer Requests und/oder eines Steuerbefehls des Masters durch Versenden eines Acknowledge-Signals.

In einer möglichen Ausgestaltung der vorliegenden Erfindung ist vorgesehen, dass das Kommunikationsmodul mehrere Antworten mindestens eines Slaves gemeinsam an den Master sendet. Insbesondere kann das Kommunikationsmodul mehrere Antworten mindestens eines Slaves sammeln und bevorzugt zusammen mit mindestens einer Timing-Information versenden. Bevorzugt bezieht sich die Timing-Information in diesem Fall auf mindestens eine der Antworten.

In einer alternativen Ausgestaltung der vorliegenden Erfindung sendet das Kommunikationsmodul mehrere Antworten mindestens eines Slaves jeweils einzeln an den Master. Insbesondere kann das Kommunikationsmodul Antworten des mindestens einen Slaves weiterleiten, sobald diese eintreffen. Bevorzugt versendet das Kommunikationsmodul die Antworten jeweils zusammen mit mindestens einer Timing-Information.

Die vorliegende Erfindung umfasst in einem zweiten, unabhängigen Aspekt ein Steuerungssystem mit mindestens einem Master, mindestens einem Slave und einem zwischen dem Master und dem mindestens einen Slave angeordneten Kommunikationsmodul, über welches der Master und der mindestens eine Slave kommunizieren, wobei der Master Steuerbefehle zum Ansteuern des mindestens einen Slave versendet und der mindestens eine Slave auf die Steuerbefehle des Masters antwortet, wobei das Kommunikationsmodul die Steuerbefehle und die Antworten jeweils weiterleitet. Erfindungsgemäß weist das Kommunikationsmodul dabei einen Polling-Modus auf, in welchem das Kommunikationsmodul in vorbestimmten Zeitabständen eigenständig und ohne Anforderung durch einen Request des Masters Polling-Befehle an den mindestens einen Slave versendet. Hierdurch kann die zwischen dem Master und dem Kommunikationsmodul ausgetauschte Datenmenge verringert werden.

Solche Polling-Befehle können bspw. dazu eingesetzt werden, um den Slaves zu signalisieren, dass die Kommunikationsverbindung noch aktiv ist. Bevorzugt antworten die Slaves auf einen Polling-Befehl mit einer Polling-Antwort.

In einer möglichen Ausführungsform der vorliegenden Erfindung wird nicht jede Polling-Antwort eines Slaves auf einen Polling-Befehl an den Master weitergeleitet. Auch hierdurch kann das Datenvolumen verringert werden.

Insbesondere kann nur die Polling-Antwort eines Slave auf den ersten oder letzten Polling-Befehl des Kommunikationsmoduls an den Master weitergeleitet werden. Alternativ kann eine Polling-Antwort auch dann weitergeleitet werden, wenn ein Zeitkriterium bezüglich der letzten weitergeleiteten Polling-Antwort erfüllt ist. Bspw. kann eine Polling-Antwort weitergeleitet werden, wenn zuvor eine bestimmte Anzahl von Polling-Antworten nicht weitergeleitet wurde und/oder für eine bestimmte Zeit keine Polling-Antworten weitergeleitet wurden.

Eine auf einen Polling-Befehl vom Slave versandte Status- und/oder Alarmmeldung wird dagegen bevorzugt immer an dem Master weitergeleitet.

Der Polling-Modus kann bevorzugt durch den Master und/oder den mindestens einen Slave ein- und ausgeschaltet werden. Bspw. kann vorgesehen sein, dass der Master und/oder der mindestens eine Slave den Polling-Modus durch das Versenden eines Requests und/oder eines Steuerbefehls und/oder einer Antwort einschalten und/oder ausschalten können.

Die Polling-Funktion des Kommunikationsmoduls gemäß dem zweiten Aspekt der vorliegenden Erfindung kann auch unabhängig von den Timing-Anforderungen bzw. der Zeitauswertung gemäß dem ersten Aspekt implementiert werden. Bevorzugt werden jedoch beide Aspekte in Kombination verwirklicht.

Bevorzugte Ausgestaltungen aller Aspekte der vorliegenden Erfindung werden im Folgenden beschrieben.

Bei dem Master kann es sich um ein Steuergerät handeln, insbesondere um ein virtuelles Steuergerät. Bei den Slaves handelt es sich bevorzugt um Endgeräte.

Bei den Steuerbefehlen und den Antworten, mit welchen der Master und die Slaves kommunizieren, kann es sich zunächst um beliebige Informationspakete und/oder Parameter handeln.

Die Kommunikation zwischen dem Master und dem Slave bzw. den Slaves erfolgt bevorzugt über ein Kommunikationsprotokoll, welches die Form und/oder den Inhalt der Steuerbefehle und Antworten definiert. Die Steuerbefehle können dabei einen Header und einen Body aufweisen, wobei der Header bevorzugt zumindest Adressierungsinformationen zu dem angesprochenen Slave umfasst. Der Body kann ein oder mehrere Datenfelder umfassen, welche je nach Steuerbefehl sehr unterschiedliche Inhalte haben können.

Bevorzugt leitet das Kommunikationsmodul die in einem Request enthalten Steuerbefehle im Hinblick auf ihre Informationsstruktur und ihren Informationsgehalt identisch weiter. Hierdurch kann das Kommunikationsmodul sehr einfach aufgebaut sein, da es die Steuerbefehle nicht auswerten und/oder verstehen muss, sondern einfach nur weiterleitet. Weiterhin kann das zur Kommunikation zwischen Master und Slaves eingesetzte Kommunikationsprotokoll verändert werden, ohne dass das Kommunikationsmodul angepasst werden müsste.

Bspw. bildet ein Request dabei einen Frame, in welchem der oder die Steuerbefehle enthalten sind und daher nur aus dem Frame herausgelöst und weiter geleitet werden müssen. Ein solcher Frame für einen Request, mit welchem der Master mit dem Kommunikationsmodul kommuniziert, kann dabei einen Header und einen Body aufweisen. Der Header weist bevorzugt mindestens Adressierungsinformationen zu dem angesprochenen Kommunikationsmodul auf, der Body mehrere Datenfelder, in welche einer oder mehrere Steuerbefehle zur Weiterleitung an den oder die Slaves enthalten sind, und ggf. eine oder mehrereTiming-Anforderungen.

Ein Request kann jedoch auch über mehrere Frames verteilt sein. Bspw. können die Steuerbefehle und die Timing-Anforderungen jeweils in separaten Frames übermittelt werden. In diesem Fall ist es jedoch notwendig, dass Zuordnungsinformationen zwischen den Steuerbefehlen und Timing-Anforderungen übermittelt werden.

Bevorzugt werden auch die Antworten der Slaves im Kommunikationsmodul lediglich in einen größeren Response-Frame eingefügt und an den Master weitergeleitet. Ein solcher Frame für einen Response, mit welchem das Kommunikationsmodul dem Master antwortet, kann dabei einen Header und einen Body aufweisen. Der Header weist bevorzugt mindestens Adressierungsinformationen zu dem Master auf, der Body mehrere Datenfelder, in welche einer oder mehrere Antworten des oder der Slaves und ggf. eine oder mehrere Timing-Informationen enthalten sind. Auch hier können jedoch mehrere Frames für eine Response eingesetzt werden.

Dabei kann das Kommunikationsmodul die in einem Request enthalten Steuerbefehle und/oder die Antworten gegebenenfalls über eine andere Bitübertragungsschicht und / oder ein anderes Protokoll übertragen.

Bevorzugt ist das Kommunikationsmodul für die angeschlossenen Slaves transparent, d.h. die Kommunikation erfolgt für die Slaves in genau der gleichen Art und Weise, als würden sie unmittelbar mit dem Master kommunizieren. Hierdurch kann das Kommunikationsmodul ohne eine Änderung an den Slaves eingesetzt werden und bspw. einen vor Ort installierten Master ersetzen.

Erfindungsgemäß kann ein anderes Kommunikationsprotokoll zur Kommunikation zwischen Master und Kommunikationsmodul eingesetzt werden als zur Kommunikation zwischen Master und Slave(s). Die Kommunikation zwischen Master und Slave kann jedoch ebenfalls aufgrund einer Master-Slave-Beziehung erfolgen, bei welcher das Kommunikationsmodul der Slave ist.

In einer bevorzugten Ausgestaltung der vorliegenden Erfindung erfolgt die Kommunikation zwischen dem Kommunikationsmodul und dem Master über ein Internet-Protokoll.

Steuerungssysteme gemäß der vorliegenden Erfindung sind in vielen Bereichen einsetzbar.

Als Kommunikationsprotokoll zur Kommunikation zwischen dem Master und dem Kommunikationsmodul und/oder zur Kommunikation zwischen dem Master und den Slaves sind bspw. eines oder mehrere der folgenden Kommunikationsprotokolle und Techniken denkbar: Real Time Protocol (RTP), Serial Port Extender via LAN/WAN (IP), IPv4, IPv6, UART, Standardkommunikationsprotokolle (http(s), REST, MQTT, usw.), NAT, usw.

Besonders bevorzugt kommt das erfindungsgemäße Steuerungssystem zur Ansteuerung von Kommunikationssystemen zum Einsatz.

In einer bevorzugten Ausgestaltung der vorliegenden Erfindung ist daher vorgesehen, dass es sich bei dem Slave um eine Steuerungskomponente eines Kommunikationssystems handelt.

Insbesondere kann es sich bei dem Slave um ein Antenna Line Device und/oder eine Steuerungskomponente einer Mobilfunkantenne handeln, insbesondere einer Mobilfunkantenne zum Betrieb an einer Mobilfunkbasisstation.

Bspw. kann es sich bei dem Slave um eine Antennensteuerung als Antenna Line Device handeln, insbesondere um eine Antennensteuerung zur Ansteuerung der Ausrichtung der Antenne, insbesondere zur Einstellung des Tilt-Winkels einer Gruppenantenne.

Weiterhin kann es sich bei dem Slave auch um ein weiteres Antenna Line Device, beispielsweise einen Verstärker handeln.

Dabei können mehrere Slaves über ein Kommunikationsmodul mit einem Master kommunizieren, insbesondere mehrere Steuerungskomponenten der Antennen einer Mobilfunkbasisstation.

In einer möglichen Ausführungsform ist das Kommunikationsmodul in der Basisstation integriert.

Weiterhin kann das Kommunikationsmodul über die HF-Signalleitungen mit der Steuerungskomponente kommunizieren, insbesondere über Datensignale, welche den HF-Signalen überlagert werden.

In einer bevorzugten Ausgestaltung der vorliegenden Erfindung kann die Kommunikation zwischen dem Master und dem Slave gemäß dem AISG Standard und/oder die Steuerbefehle und/oder Antworten entsprechen dem AISG-Standard erfolgen. Insbesondere handelt es sich dabei um den AISG-Standard 1.0 oder höher. Der Begriff AISG umfasst im Rahmen der vorliegenden Erfindung dabei jedes Protokoll, welches aus dem ersten AISG-Standard hervorgegangen ist. Der Begriff AISG umfasst daher insbesondere AISG1.0, AISG1.1, AISG2.0 und 3GPP TS 25.466.

In einer alternativen Ausgestaltung der vorliegenden Erfindung handelt es sich bei dem Slave dagegen um eine Steuerungskomponente eines Satellitenreceivers und/oder einer Satellitenantenne.

In einer bevorzugten Ausgestaltung der vorliegenden Erfindung wird das erfindungsgemäße Steuerungssystem zur Ansteuerung eines Kommunikationssystems eingesetzt, welches eine Vielzahl von entfernt voneinander angeordneten Slaves umfasst, wobei die Steuerung des Kommunikationssystems zentral erfolgt, indem einer oder mehrere zentral angeordnete Master mit den Slaves über jeweils im Bereich der Slaves angeordnete Kommunikationsmodule kommunizieren. Insbesondere kann es sich bei dem Kommunikationssystem dabei wie oben beschrieben um ein Mobilfunkkommunikationssystem handeln.

Die vorliegende Erfindung umfasst weiterhin ein Kommunikationsmodul, welches zwischen einem Master und mindestens einem Slave anordenbar ist und Steuerbefehle des Masters zum Slave und Antworten des Slaves zum Master weiterleitet. Das Kommunikationsmodul ist dadurch gekennzeichnet, dass es in einer ersten Variante des ersten Aspekts einen oder mehrere Requests des Masters, mit welchem oder mit welchen der Master mindestens einen Steuerbefehl und mindestens eine Timing-Anforderung übermittelt, verarbeitet, indem es den mindestens einen Steuerbefehl gemäß der mindestens einen Timing-Anforderung an den mindestens einen Slave sendet, und in einer zweiten Variante des ersten Aspekts Timing-Informationen bezüglich der Kommunikation mit dem mindestens einen Slave aufnimmt und an den Master sendet. Bevorzugt sind wiederum beide Varianten miteinander kombiniert. Gemäß dem zweiten Aspekt weist das Kommunikationsmodul einen Polling-Modus auf, in welchem es in vorbestimmten Zeitabständen eigenständig und ohne Anforderung durch einen Request des Masters Polling-Befehle an den mindestens einen Slave versendet. Bevorzugt sind beide Aspekte in Kombination verwirklicht.

Bevorzugt ist das Kommunikationsmodul so aufgebaut und arbeitet so, wie dies bereits oben für das erfindungsgemäße Steuerungssystem beschrieben wurde, und/oder dient zum Aufbau eines solchen Steuerungssystems.

Die vorliegende Erfindung umfasst weiterhin ein Verfahren zur Ansteuerung mindestens eines Slaves über einen Master, wobei zwischen dem Master und dem mindestens einen Slave ein Kommunikationsmodul angeordnet ist, über welches der Master und der mindestens eine Slave kommunizieren, wobei der Master Steuerbefehle zum Ansteuern des mindestens einen Slave versendet und der mindestens eine Slave auf die Steuerbefehle des Master antwortet, wobei das Kommunikationsmodul die Steuerbefehle und die Antworten jeweils weiterleitet. Dabei ist in einer ersten Variante des ersten Aspekts vorgesehen, dass der Master an das Kommunikationsmodul in einem oder mehreren Requests mindestens einen Steuerbefehl und eine zugehörige Timing-Anforderung übermittelt, wobei das Kommunikationsmodul den oder die mehreren Requests verarbeitet, indem es den mindestens einen Steuerbefehl gemäß der mindestens einen Timing-Anforderung an den mindestens einen Slave sendet. Gemäß einer zweiten Variante des ersten Aspekts ist vorgesehen, dass das Kommunikationsmodul Timing-Informationen bezüglich der Kommunikation mit dem mindestens einen Slave aufnimmt und an den Master sendet. Bevorzugt sind wiederum beide Varianten miteinander kombiniert. Gemäß dem zweiten Aspekt versendet das Kommunikationsmodul in einem Polling-Modus in vorbestimmten Zeitabständen eigenständig und ohne Anforderung durch einen Request des Masters Polling-Befehle an den mindestens einen Slave. Bevorzugt sind beide Aspekte in Kombination verwirklicht.

Bevorzugt erfolgt das Verfahren so, wie dies bereits oben für das erfindungsgemäße Steuerungssystem beschrieben wurde, und/oder dient zum Betrieb eines solchen Steuerungssystems.

Die vorliegende Erfindung wird nun anhand von Ausführungsbeispielen und Zeichnungen näher beschrieben. Dabei zeigen:
- Fig. 1:: Ein Steuerungssystem gemäß dem Stand der Technik,
- Fig. 2:: ein Kommunikationsdiagramm, welches typische Timing-Anforderungen bei der Kommunikation gemäß dem Stand der Technik wiedergibt,
- Fig. 3:: ein erstes Ausführungsbeispiel eines erfindungsgemäßen Steuerungssystems mit einem Ausführungsbeispiel eines erfindungsgemäßen Kommunikationsmoduls,
- Fig. 4:: ein zweites Ausführungsbeispiel eines erfindungsgemäßen Steuerungssystems, bei welchem zusätzlich zwischen dem Modul und den Slaves ein Relay angeordnet ist,
- Fig. 5a:: ein Kommunikationsdiagramm, welches einen typischen Kommunikationsvorgang in einem Steuerungssystem gemäß der vorliegenden Erfindung darstellt,
- Fig. 5b:: ein Kommunikationsdiagramm, welches den in Fig. 5a dargestellten Kommunikationsvorgang in einer Variante darstellt, in welcher das Kommunikationsmodul den Eingang eines Requests bestätigt,
- Fig. 6a:: ein Kommunikationsdiagramm, welches die Abarbeitung von zwei Steuerbefehlen gemäß mindestens einer Timing-Anforderung gemäß der vorliegenden Erfindung wiedergibt, wobei die Antworten des Slaves auf die Steuerbefehle gesammelt und gemeinsam übertragen werden,
- Fig. 6b:: das in Fig. 6a dargestellte Kommunikationsdiagramm, wobei die Antworten des Slaves auf Steuerbefehle separat übertragen werden,
- Fig. 7:: drei Varianten von Steuerungssystemen zur Ansteuerung von Komponenten einer Antenne einer Mobilfunkbasisstation gemäß dem Stand der Technik,
- Fig. 8:: eine typische Abfolge von Steuerbefehlen mit einer Timing-Anforderung gemäß dem Stand der Technik,
- Fig. 9:: ein Ausführungsbeispiel eines erfindungsgemäßen Steuerungssystems zur Ansteuerung von Antennenkomponenten einer Mobilfunkbasisstation gemäß der vorliegenden Erfindung,
- Fig. 10a:: ein Kommunikationsdiagramm, welches die Übertragung und Abarbeitung eines Requests gemäß der vorliegenden Erfindung zeigt,
- Fig. 10b:: ein Vergleichsbeispiel, welches eine vergleichbare Abarbeitung ohne die erfindungsgemäße Funktionalität des Kommunikationsmoduls zeigt, und bei welcher die Timing-Anforderung nicht eingehalten werden kann,
- Fig. 11a:: ein Kommunikationsdiagramm, welches ein zweites Beispiel für einen Request und dessen Abarbeitung gemäß der vorliegenden Erfindung zeigt,
- Fig. 11b:: ein Vergleichsbeispiel, welches die Abarbeitung ohne die erfindungsgemäße Funktionalität des Kommunikationsmoduls zeigt, und bei welcher die Timing-Anforderung nicht eingehalten werden kann,
- Fig. 12:: ein Kommunikationsdiagramm, welches eine Polling-Funktion eines erfindungsgemäßen Kommunikationsmoduls wiedergibt, mit einer ersten Variante zum Ausschalten der Polling-Funktion,
- Fig. 13:: ein Kommunikationsdiagramm, welches die Polling-Funktion des erfindungsgemäßen Kommunikationsmoduls wiedergibt, mit einer zweiten Variante zum Ausschalten der Polling-Funktion,
- Fig. 14:: ein Kommunikationsdiagramm, welches die Polling-Funktion eines erfindungsgemäßen Kommunikationsmoduls wiedergibt, mit einer dritten Variante zum Ausschalten der Polling-Funktion,
- Fig. 15:: ein Kommunikationsdiagramm, welches die Polling-Funktion eines erfindungsgemäßen Kommunikationsmoduls wiedergibt, mit einer vierten Variante zum Ausschalten der Polling-Funktion,
- Fig. 16:: ein Zustandsmodell für die Polling-Funktion, welches die in Fig. 12 bis 14 dargestellten Varianten wiedergibt, und
- Fig. 17:: ein Schaltbild eines Ausführungsbeispiels eines erfindungsgemäßen Kommunikationsmoduls.

Die vorliegende Erfindung betrifft die Ansteuerung von Endgeräten durch ein Steuergerät. Das Steuergerät stellt den Master dar, welcher als einziger das Recht hat, unaufgefordert auf die gemeinsame Ressource zuzugreifen, d. h. die Kommunikation zu initiieren. Bei dem Endgerät bzw. den Endgeräten handelt es sich um Slaves, welche nicht von sich aus auf die gemeinsame Ressource zugreifen können und daher eine Kommunikation nicht initiieren können. Vielmehr müssen die Slaves warten, bis sie vom Master gefragt werden.

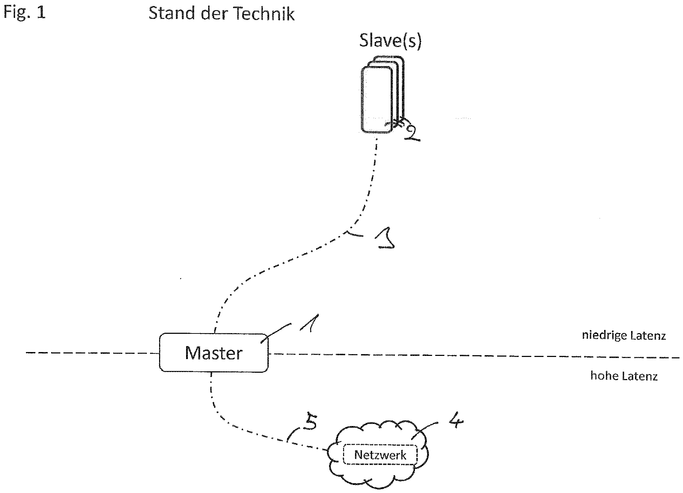

Fig. 1 zeigt ein Ausführungsbeispiel eines solchen Steuerungssystems gemäß dem Stand der Technik. Der Master 1 ist über eine Kommunikationsverbindung 3 mit einem oder mehreren Slaves 2 verbunden. Der Master 1 kann dabei seinerseits über eine Kommunikationsverbindung 5 mit übergeordneten Steuerinstanzen in Verbindung stehen, beispielsweise über ein Netzwerk 4.

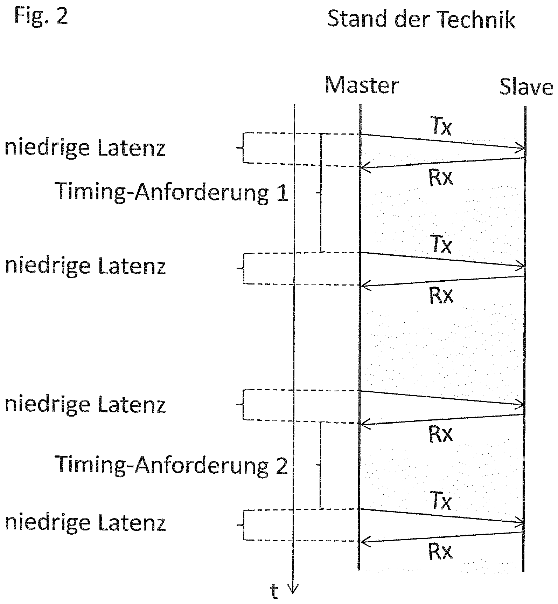

Die Kommunikation zwischen Master und Slave kann dabei gewissen Timing-Anforderungen unterliegen. Solche Timing-Anforderungen können sich entweder aus der konkreten Steuerungssituation, oder aus dem zugrunde liegenden Kommunikationsstandard ergeben. Fig. 2 zeigt zwei typische Timing-Anforderungen für die zeitliche Abfolge zweier Steuersignale Tx1 und Tx2 bzw. Tx3 und Tx4, welche vom Master an einen Slave gesandt werden. Bei der Timing-Anforderung 1 handelt es sich um den zeitlichen Abstand zwischen den Absenden des ersten Steuerbefehls Tx1 und dem Absenden des zweiten Steuerbefehls Tx2. Bei der Timing-Anforderung 2 handelt es sich um den zeitlichen Abstand zwischen dem Erhalt der Antwort Rx3 auf einen ersten Steuerbefehl Tx3 und dem Absenden des zweiten Steuerbefehls Tx4.

Gemäß dem Stand der Technik bestimmt dabei der Master das Timing der Kommunikation, d.h. das Timing des Absendens der Steuersignale Tx. Weiterhin misst der Master üblicherweise das Timing der auf die Steuerbefehle Tx erhaltenen Antworten Rx der Slaves, und wertet dieses aus.

Die Latenzen in der Kommunikation zwischen dem Master und dem Slave beeinflussen direkt das gemessene Timing und bestimmen, ob Timing-Anforderungen in der Kommunikation eingehalten werden können. Daher muss die Kommunikationsverbindung 3 zwischen dem Master und den Slaves eine niedrige bzw. definierte Latenz aufweisen.

Die Kommunikationsverbindung 5 zwischen dem Master und den übergeordneten Steuerinstanzen weist dagegen üblicherweise eine hohe bzw. undefinierte Latenz auf, insbesondere wenn es sich dabei um eine komplexe Netzwerkinfrastruktur handelt.

Wird die Kommunikation nämlich durch komplexe Netzwerk-Infrastrukturen aufgebaut, so sind die Latenzen oftmals groß oder zumindest unbekannt. Dabei betragen die Latenzen üblicherweise ca. 5 Mikrosekunden pro Kilometer bzw. 5 Millisekunden pro 1.000 Kilometer, so dass die Latenz über ein Netzwerk üblicherweise größer ist als 1 Millisekunde und/oder von dem unbekannten Weg abhängt, welchen eine Nachricht durch das Netzwerk nimmt. Solche großen bzw. unbekannten Latenzen wirken sich insbesondere auf Datenpakete aus, welche mit einer bestimmten Synchronizität die Endgeräte erreichen müssen, d.h. auf Datenpakete, welche zum Beispiels innerhalb eines bestimmten Zeitintervalls dem Endgerät kommuniziert worden sein müssen.

Solche Latenzen schränken daher den räumlichen Abstand zwischen dem als Master arbeitenden Steuergerät und den als Slaves arbeitenden Endgeräten ein. Insbesondere wurden daher gemäß dem Stand der Technik die Steuergeräte als abgesetzte Steuergeräte lokal installiert und betrieben, und von zentralen Steuerelementen 4 lediglich angesteuert und überwacht. Die abgesetzten Steuergeräte bestimmen, messen, überwachen und werten das Timing jedoch lokal aus, wie dies oben beschrieben wurde.

Heutzutage werden Funktionen, welche bisher von diskreten Geräten ausgeführt wurden, jedoch zunehmend mittels Servertechnologien zentral übernommen. Diese Technologie bringt für die Anwender deutliche Vorteile, insbesondere im Hinblick auf die Skalierbarkeit, Wartung, Überwachung, Back-up and Restore, Kosten sowie Komplexität.

Im Prinzip könnten die oben genannten Steuergeräte daher ebenfalls mittels Servertechnologien realisiert werden, so dass ein Steuergerät durch ein virtuelles Steuergerät ersetzt würde. Hierdurch verlieren jedoch die im Einsatz befindlichen Endgeräte ihre räumliche Nähe zu den Steuergeräten und damit die niedrige Latenz. Bei bekannten Lösungen wird die Realisierung von Steuergeräten mittels Servertechnologien daher durch die Problematik der großen bzw. unbekannten Latenzen limitiert bzw. blockiert.

Die im Folgenden dargestellte erfindungsgemäße Lösung eliminiert dagegen den Einfluss von Netzwerk- und Medium- gegebenen Latenzen auf die Kommunikation weitgehend.

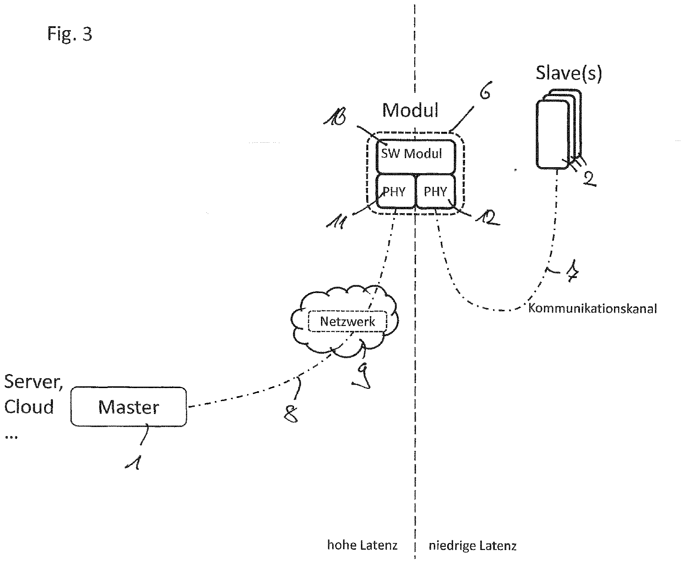

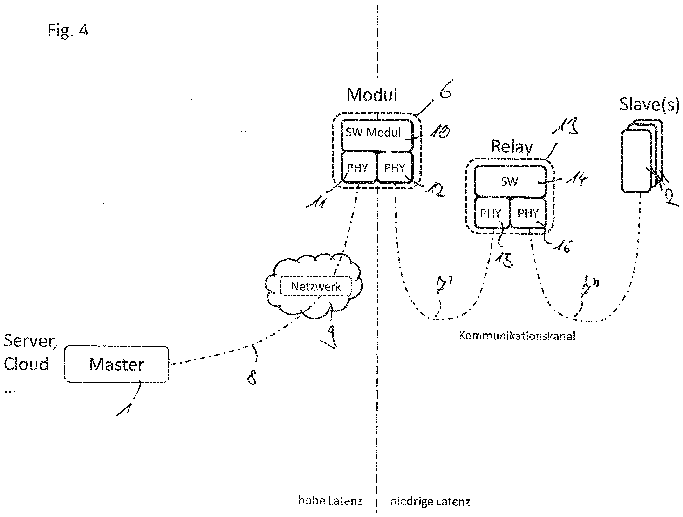

In Fig. 3 und 4 sind zwei Ausführungsbeispiele eines erfindungsgemäßen Steuerungssystems aus Master 1, Netzwerk 9, Modul 6 und Slave 2 dargestellt. Dabei kommuniziert der Master 1 mit dem einen oder mehreren Slaves 2 über ein Kommunikationsmodul 6. Das über ein Netzwerk 9 mit dem Master 1 in Verbindung stehende Modul 6 reicht die vom Master 1 an den Slave 2 gerichteten Datenpakete an den Slave weiter, empfängt von diesem die jeweilige Antwort und sendet diese über das Netzwerk 9 an den Master 1.

Zwischen Modul 6 und Slave 2 sind nur geringe bzw. definierte Latenzen erlaubt. Beispielsweise sind die maximal erlaubten Latenzen zwischen Modul 6 und Slave 2 dabei kleiner als 20 Millisekunden, weiter bevorzugt kleiner als 10 Millisekunden. Das Kommunikationsmodul 6 steht hierfür üblicherweise über eine direkte Kommunikationsverbindung 7 mit niedriger bzw. definierter Latenz mit dem einen oder mehreren Slaves 2 in Verbindung. Bevorzugt ist das Kommunikationsmodul 6 hierfür in räumlicher Nähe der Slaves angeordnet.

Der als Steuergerät fungierende Master 1 kann dagegen auch über komplexe Netzwerke 9 mit hoher bzw. unbekannter Latenz mit dem Kommunikationsmodul 6 in Verbindung stehen. Insbesondere kann der Master 1 dabei zentral in einem Rechenzentrum als virtuelles Steuergerät implementiert werden. Er kann dort beispielsweise auf (virtuellen) Servern abgebildet werden, beispielsweise über Clouds, vRAN. Insbesondere kann die Kommunikation zwischen dem Master 1 und dem Kommunikationsmodul 6 dabei über ein Internet-Protokoll folgen.

Das Kommunikationsmodul 6 weist eine erste physikalische Schnittstelle 11 auf, über welches es mittels eines bestimmten Protokolls mit dem Master 1 kommuniziert, und eine zweite physikalische Schnittstelle 12, über welches es mittels eines anderen Protokolls mit den Slaves kommuniziert. Weiterhin weist das Kommunikationsmodul 6 ein Softwaremodul 10 auf, welches die im Folgenden beschriebenen Funktionalitäten implementiert.

Bei dem in Fig. 4 dargestellten Ausführungsbeispiel ist zwischen dem Kommunikationsmodul 6 und dem einen oder mehreren Slaves 2 zusätzlich ein Relay 13 in die Kommunikationsverbindung zwischengeschaltet. Hier muss darauf geachtet werden, dass die Latenz über die Kommunikationsverbindung 7' zwischen dem Modul 6 und dem Relay 13, und über die Kommunikationsverbindung 7" zwischen dem Relay 13 und den Slaves 2 die Anforderungen an die niedrige bzw. definierte Latenz erfüllen. Das optional vorgesehene Relay 13 weist einen vergleichbaren Aufbau wie das Kommunikationsmodul auf, wobei das Softwaremodul 14 jedoch lediglich eine Weiterleitung der wechselseitigen Kommunikation vornimmt.

Das erfindungsgemäße Kommunikationsmodul 6 nimmt ebenfalls eine Weiterleitung der wechselseitigen Kommunikation zwischen dem Master und dem oder den Slaves vor. Die Kommunikation zwischen Master und Slaves erfolgt dabei über vom Master an die Slaves gerichtete Steuerbefehle und von den Slaves an den Master gerichtete Antworten auf die Steuerbefehle. Bei Steuerbefehlen und Antworten im Sinne der vorliegenden Erfindung kann es sich dabei um beliebige Informationspakete handeln, welche zwischen dem Master und den Slaves gemäß dem jeweiligen Protokoll ausgetauscht werden.

Das Kommunikationsmodul 6 erlaubt es dem Master in einem ersten Aspekt der vorliegenden Erfindung weiterhin, mit einem Request oder mehreren Requests an das Kommunikationsmodul neben einem oder mehreren Steuerbefehlen für den oder die Slaves auch eine oder mehrere Timing-Anforderungen an das Kommunikationsmodul zu übermitteln. Das Kommunikationsmodul leitet den oder die Steuerbefehle dann gemäß der Timing-Anforderung an den oder die Slaves 2 weiter. Die Requests des Masters können dabei beispielsweise mittels http(s) und/oder Websockets übermittelt werden.

Im Ausführungsbeispiel stellt das Steuergerät dem Kommunikationsmodul damit alle Parameter und Daten der Kommunikation zwischen dem Master und den Slaves zusammen mit Timing-Anforderungen zur Verfügung. Die Timing-Anforderungen bestimmen dann die zeitliche Abfolge und/oder Umsetzung der Informationen am Kommunikationsmodul. Alle notwendigen Parameter und Informationen zur Kommunikation mit den Endgeräten, inklusive der Timing-Parameter, werden daher von dem als Master arbeitenden Steuergerät zum Beispiel aus der Cloud an das Kommunikationsmodul kommuniziert. Die Timing-Parameter werden dann im Kommunikationsmodul verarbeitet, welches die Kommunikation mit den Endgeräten vor Ort durchführt. Der Master bestimmt daher weiterhin das Timing der Kommunikation mit den Slaves, jedoch nicht mehr nur unmittelbar durch das Absenden der Steuerbefehle, sondern durch die Übermittlung der Timing-Anforderungen an das Kommunikationsmodul.

In einem zweiten Aspekt der vorliegenden Erfindung misst das Kommunikationsmodul das Timing der Kommunikation mit den Slaves und sendet diese Timing-Information an den Master. Bevorzugt wird dabei das Ergebnis der Kommunikation mit den Slaves, inklusive ermittelter Timingwerte, von dem Kommunikationsmodul an das Steuergerät kommuniziert. Das Steuergerät kann so das vom Kommunikationsmodul weitergeleitete Ergebnis der Kommunikation inklusive des Timing-Ergebnisses zentral auswerten.

Im Ausführungsbeispiel erfolgt im Kommunikationsmodul keine Verarbeitung der zwischen dem Master und den Slaves übertragenen Informationen. Vielmehr werden diese durch das Kommunikationsmodul lediglich weitergeleitet und gegebenenfalls auf eine andere physikalische Schnittstelle umgesetzt. Das Kommunikationsmodul wertet daher lediglich die Timing-Anforderungen aus, und steuert die Kommunikation mit den Endgeräten auf Grundlage dieser Timing-Anforderung, und/oder misst das Timing der Kommunikation mit den Endgeräten und übermittelt die Ergebnisse an den Master.

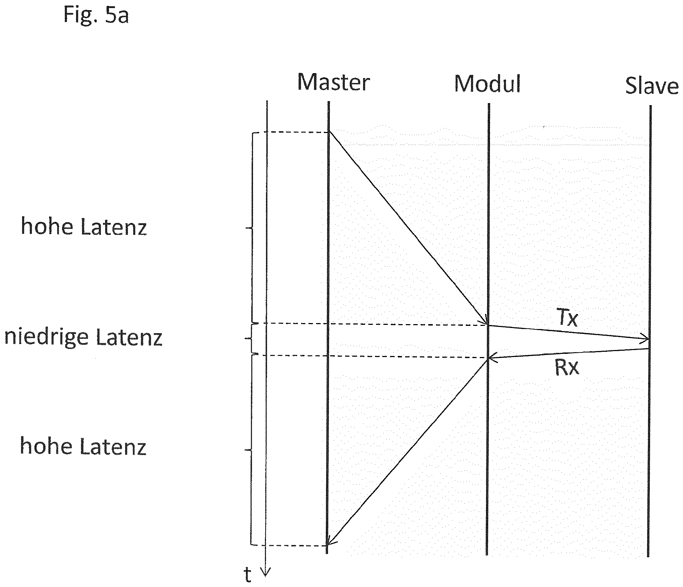

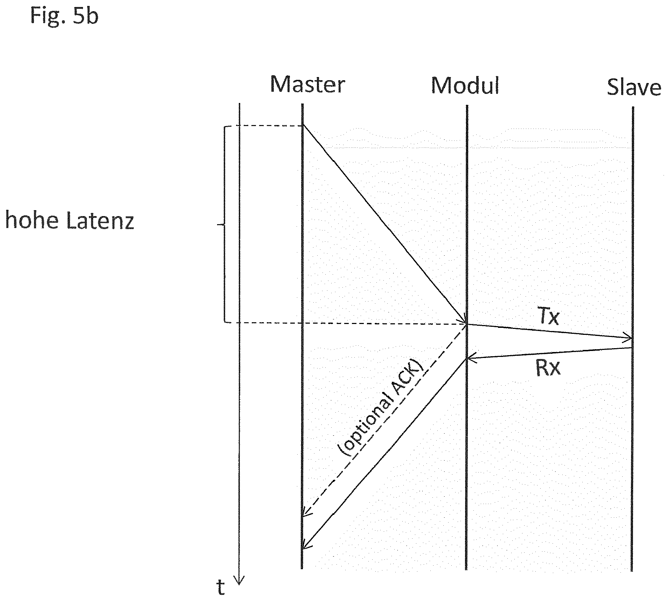

Fig. 5a und 5b zeigen zur Veranschaulichung des zweiten Aspekts der vorliegenden Erfindung einen Kommunikationsvorgang zwischen dem Master, dem Kommunikationsmodul und dem Slave. Dabei empfängt das Kommunikationsmodul über Strecken hoher bzw. unbekannter Latenz ein für den Slave bestimmtes Datenpaket, reicht dieses an den Slave weiter und empfängt dessen Antwort, welche wiederrum an den Master über Strecken hoher bzw. unbekannter Latenz weitergereicht wird. Hierbei ermittelt das Modul die für die Kommunikation zwischen Modul und Slave benötigte Zeit und kommuniziert diese dem Master, welcher damit Remote das Einhalten des geforderten Timings überwachen kann. Die hohen Latenzen der Kommunikation zwischen Kommunikationsmodul und Master haben daher auf die Überwachung des Timings durch den Master keine Auswirkung, weil die Ermittlung der Timing-Information bereits im Modul erfolgt.

Eine solche Ausgestaltung ist auch dann von Vorteil, wenn die Requests des Masters keine Timing-Anforderungen umfassen, und lediglich das Kommunikationsmodul Timing-Informationen zur Kommunikation zwischen Modul und Slave ermittelt und an den Master weiterleitet.

Für die Kommunikation zwischen dem Kommunikationsmodul und dem Slave liegt dagegen eine niedrige Latenz vor, da das Modul ortsnah zu den Slaves angeordnet ist.

In Fig. 5a und 5b wird dabei jeweils ein Request vom Master an das Modul gesendet, der darin enthaltene Steuerbefehl Tx an den Slave übermittelt, welcher mit der Antwort Rx antwortet. Die Antwort Rx wird dann vom Kommunikationsmodul an den Master weitergeleitet. Bei der Kommunikation gemäß Fig. 5b wird zusätzlich noch bei Erhalt eines Requests vom Master ein Acknowledge-Signal an dem Master zurück gesandt.

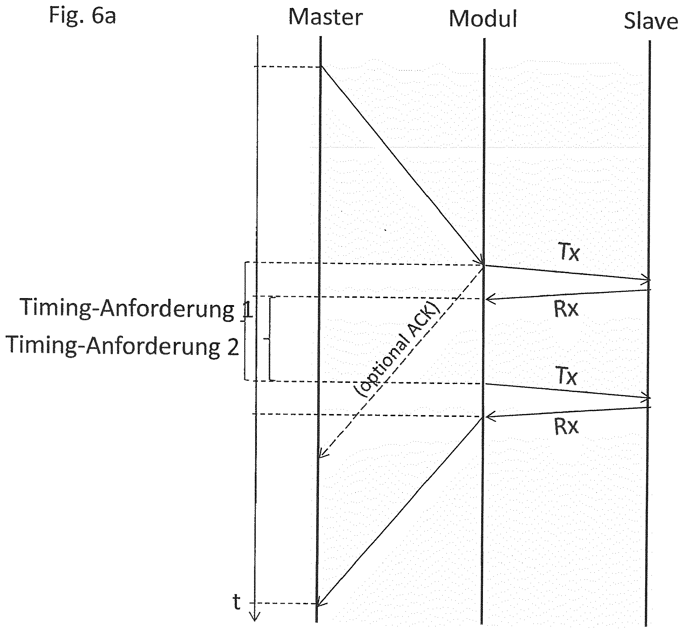

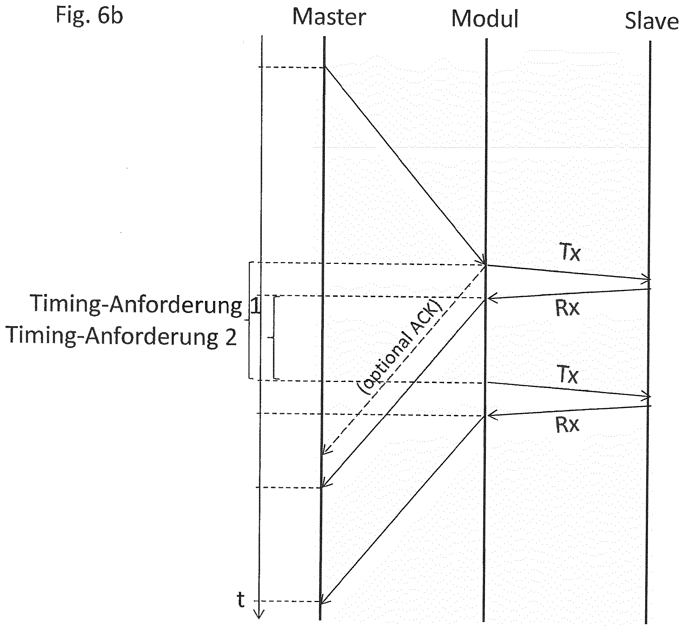

Gemäß dem ersten Aspekt der vorliegenden Erfindung können die Requests, welche vom Master an das Modul gesendet werden, zusätzlich zu einem oder mehreren Steuerbefehlen Timing-Anforderungen für die Kommunikation zwischen Modul und Slave enthalten. Dies wird in Fig. 6a und 6b beispielhaft verdeutlicht. Bei den dort dargestellten Ausführungsbeispielen kann ein Request zwei oder mehrere für den oder die Slaves bestimmte Informationspakete enthalten, welche gemäß einer oder mehreren, ebenfalls mit dem Request übermittelten Timing-Anforderungen von dem Kommunikationsmodul an das Endgerät kommuniziert werden sollen. Insbesondere können die Informationspakete dabei der Timing-Anforderung genügend in einer vorgegebenen zeitlichen Abfolge an die Slaves weitergeleitet werden. Auch hier kann die Kommunikationen zwischen Steuergerät und Modul mit oder ohne ein Acknowledge-Signal erfolgen.

Die in Fig. 6a und 6b dargestellte Kommunikationsabfolge entspricht dabei der in Fig. 2 dargestellten Kommunikationsabfolge gemäß dem Stand der Technik. Auch hier besteht eine Timing-Anforderung 1 zwischen dem Absenden des ersten Steuerbefehls Tx₁ und des zweiten Steuerbefehls Tx₂, bzw. eine Timing-Anforderung 2 zwischen dem Erhalt der Antwort Rx₁ auf den ersten Steuerbefehl und dem Absenden des zweiten Steuerbefehls Tx₂. Der vom Master an das Modul übermittelte Request umfasst daher neben den beiden Steuerbefehlen Tx₁ und Tx₂ zusätzlich die erste oder die zweite Timing-Anforderung. Das Kommunikationsmodul sendet dann die beiden Steuerbefehle selbsttätig unter Berücksichtigung der Timing-Anforderung bzw. der Timing-Anforderungen an den Slave. Insbesondere bedarf es zum Absenden des zweiten Steuerbefehls Tx₂ keines weiteren Requests des Masters.

Bei dem in Fig. 6a dargestellten Ausführungsbeispiel wird der Request des Masters nur mit einer Response durch das Kommunikationsmodul beantwortet. Hierfür sammelt das Kommunikationsmodul die Antworten des Slaves, hier Rx₁ und Rx₂, auf die Steuerbefehle Tx₁ und Tx₂, und überträgt diese gesammelt in einer Response (ggf. zusammen mit den Timing-Informationen gemäß dem zweiten Aspekt). Bei dem in Fig. 6a dargestellten Ausführungsbeispiel wird daher erst zum Schluss der durch den Request ausgelösten zeitlichen Abfolge der Kommunikation zwischen Modul und Endgerät ein Response, d.h. eine Antwort auf den Request, zum Steuergerät gesendet, welcher die Antworten des Slaves und ggf. alle Informationen zum zeitlichen Verlauf der Kommunikation zwischen Modul und Endgerät enthält.

Bei der in Fig. 6b dargestellten Kommunikation wird dagegen auch innerhalb der zeitlichen Abfolge der durch den Request ausgelösten Kommunikation zwischen dem Kommunikationsmodul und dem Endgerät ein Response zum Steuergerät gesendet. Dieser enthält beispielsweise die erste Antwort Rx₁ des Slaves, ggf. zusammen mit der zugehörigen Timing-Information.

Bei der Kommunikation in Fig. 6a und 6b empfängt das Kommunikationsmodul daher über Strecken hoher bzw. unbekannter Latenz innerhalb eines Datenpakets zwei für den Slave bestimmte Datenpakete, reicht diese gemäß des zusammen mit den Datenpaketen übermittelten Timing-Anforderung 1 bzw. Timing-Anforderung 2 an den Slave weiter und empfängt dessen Antworten, welche entweder gemeinsam oder getrennt über Strecken unbekannter Latenz an den Master gesendet werden.

Die Timing-Anforderungen können daher trotz der hohen Latenz der Kommunikation zwischen dem Kommunikationsmodul und dem Master eingehalten werden. Eine solche Ausgestaltung ist auch dann von Vorteil, wenn das Kommunikationsmodul keine Timing-Informationen zur Kommunikation zwischen Modul und Slave ermittelt und überträgt.

Bei diesem sowie allen folgenden Ausführungsbeispielen des ersten Aspektes werden alles zusammengehörigen Steuerbefehle und Timing-Anforderungen jeweils gemeinsam in einem Request von dem Master an die Slaves übermittelt. Der Request des Masters kann jedoch in einer alternativen Ausführungsform auch auf zwei oder mehr Requests aufgeteilt werden. Insbesondere können die zwei oder mehreren für den oder die Slaves bestimmten Informationspakete und die eine oder mehreren Timing-Anforderungen auch auf zwei oder mehr Requests aufgeteilt werden. In diesem Fall sollte eine Verknüpfung der zusammengehörigen Request erfolgen. Bspw. könnte der Master zuerst den Steuerbefehl an das Kommunikationsmodul schicken und danach in einem zweiten Ticket die Timing-Anforderung (oder umgekehrt) und dabei dem Kommunikationsmodul die Möglichkeit zur Verknüpfung geben (z.B. per ID im Ticket). In diesem Fall wird das und das Kommunikationsmodul erst dann den Request weiter bearbeiten, wenn beide Infos vom Master eingetroffen sind.

Weiterhin hat der Master natürlich auch im Rahmen des ersten Aspekts die Möglichkeit, in einem Request lediglich einen Steuerbefehl zur unmittelbaren Weiterleitung an den oder die Slaves an das Kommunikationsmodul zu übermitteln. Weiterhin muss ein Request auch keine Timing-Anforderung umfassen.

Weiterhin ist es im Rahmen des zweiten Aspektes nicht notwendig, dass das Kommunikationsmodul die Timing-Informationen durchgehend ermittelt und überträgt. Beispielsweise kann vorgesehen sein, dass das Kommunikationsmodul die Timing-Informationen nur dann ermittelt, wenn der Request eine Timing-Anforderung und/oder einen entsprechenden Befehl zur Ermittlung von Timing-Informationen enthält. In einer alternativen Ausführungsform kann das Kommunikationsmodul jedoch bei jeder Kommunikation mit dem Slave Timing-Informationen ermitteln und an den Master übersenden.

Bevorzugt sind beide Aspekte im Rahmen der vorliegenden Erfindung in Kombination verwirklicht. In diesem Fall hat der Master sowohl die Möglichkeit, innerhalb eines oder mehrerer Requests, zusammen mit für den Slave bestimmten Datenpaketen, Timing-Anforderungen zu übersenden, als auch durch das Kommunikationsmodul ermittelte Timing-Informationen der Kommunikation zwischen Modul und Slave zu erhalten und auszuwerten.

Das erfindungsgemäße Steuerungssystem kann in beliebigen Anwendungsgebieten zum Einsatz kommen. Eine besonders bevorzugte Anwendung ist jedoch die Ansteuerung eines Kommunikationssystems, und insbesondere die Ansteuerung von Antennenkomponenten von Mobilfunkantennen einer Mobilfunkbasisstation. Bei den als Endgeräten angesteuerten Slaves handelt es sich dabei insbesondere um Antenna Line Devices und/oder die Antennensteuerung. Die Antennensteuerung kann dabei insbesondere eine RET umfassen, über welche das Strahlungsdiagramm einer Gruppenantenne verstellt wird. Als Kommunikationsstandard zur Kommunikation mit den Endgeräten kann zum Beispiel 3GPP und/oder AISG zum Einsatz kommen. Die Endgeräte können über das Steuerungssystem von einem als Master arbeitenden zentralen Steuerelement wie beispielsweise einem NEM angesteuert und überwacht werden.

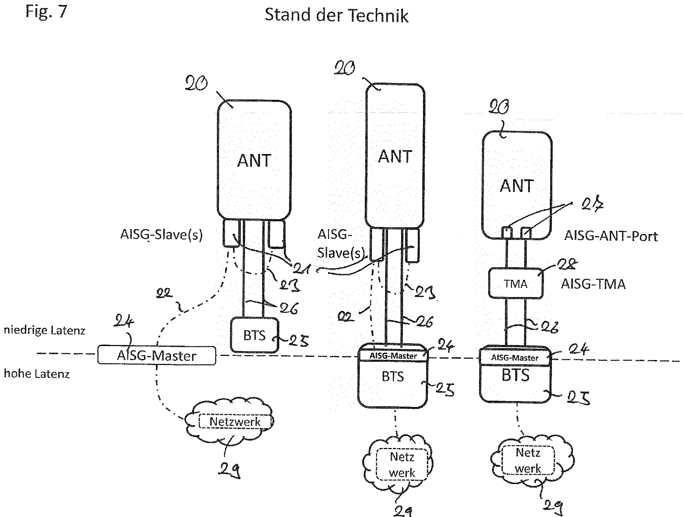

In Fig. 7 sind nebeneinander drei alternative Architekturen zur Ansteuerung von Antennenkomponenten gemäß dem Stand der Technik gezeigt. Dabei ist jeweils eine Mobilfunkantenne 20 vorgesehen, welche über Hochfrequenzleitungen 26 mit einer Basisstation 25 in Verbindung steht und über diese mit Signalen versorgt wird. In örtlicher Nähe zur Mobilfunkbasisstation bzw. Antenne ist ein Master 24 vorgesehen, welcher die Antennenkomponenten ansteuert. Die Kommunikation zwischen dem Master und den Slaves erfolgt dabei über AISG bzw. 3GPP. Der Master 24 kann wiederrum über ein Netzwerk 29 angesteuert werden.

Im Rahmen der vorliegenden Erfindung steht der Begriff AISG repräsentativ für alle unterschiedlichen Protokollversionen, welche aus dem ersten AISG-Standard hervorgegangen sind. Hier handelt es sich u.a. um, AISG1.0, AISG1.1, AISG2.0 und 3GPP TS 25.466.

Bei dem linken und den mittleren Ausführungsbeispiel handelt es sich bei den Slaves jeweils um RETs, welche an der Antenne angeordnet sind. Insbesondere weisen diese einen Motor auf, über welchen eine oder mehrere Phasen-Schieber der Antenne verstellt werden können. Die Kommunikation zwischen den Slaves und dem Master erfolgt dabei über separate Steuerleitungen 22 bzw. 23. Bei dem linken Ausführungsbeispiel ist der Master separat zur Basisstation 25 ausgestaltet, bei dem mittleren Ausführungsbeispiel in die Basisstation 25 integriert.

Bei dem rechts dargestellten Ausführungsbeispiel ist der Master 24 ebenfalls in die Basisstation 25 integriert, und kommuniziert mit den Antennenkomponenten über die Hochfrequenzleitungen 26. Dabei sind die beiden Antennenports 27 mit Kommunikationsschnittstellen ausgestattet, über welche die Kommunikationssignale zu einer internen Antennensteuerung, beispielsweise ebenfalls einer RET weitergeleitet werden. Bei dem rechts dargestellten Ausführungsbeispiel ist in die Hochfrequenzleitung weiterhin ein Verstärker 28 zwischengeschaltet, welcher ebenfalls als Slave angesprochen werden kann und ansonsten die Kommunikationssignale an die Antennensteuerung weiterleitet.

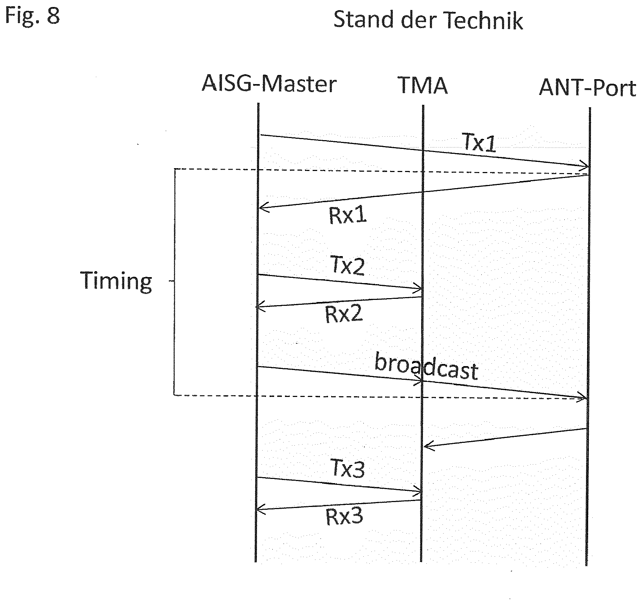

Fig. 8 zeigt einen typischen Kommunikationsverlauf bei dem in Fig. 7 rechts dargestellten Ausführungsbeispiel gemäß dem Stand der Technik. Dabei sendet der Master einen ersten Ansteuerungsbefehl Tx₁ an die Antennensteuerung, welche mit einer Antwort Rx₁ antwortet. Daraufhin sendet der Master einen zweiten Steuerbefehl Tx₂ an den Verstärker, welcher mit einer Antwort Rx₂ antwortet. Daraufhin sendet der Master einen Broadcast-Signal an alle angeschlossenen Slaves. Hierbei besteht eine Timing-Anforderung zwischen der Ankunft des ersten Sendesignals Tx₁ und des Broadcast-Signals bei der Antennensteuerung. Gemäß dem Stand der Technik wird dieses eingehalten, indem der als Steuergerät fungierende Master im Bereich der Mobilfunkbasisstation angeordnet wird.

Sämtliche der in Fig. 7 dargestellten Ausführungsbeispiele gemäß dem Stand der Technik lassen sich auch als ein erfindungsgemäßes Steuerungssystem ausgestalten, indem der in Fig. 7 eingezeichnete AISG-Master 24 durch ein an gleicher Stelle angeordnetes und in gleicher Weise verbundenes Kommunikationsmodul gemäß der vorliegenden Erfindung ersetzt wird, und die Funktionalität des Masters beispielsweise in das Netzwerk 29 verlegt wird.

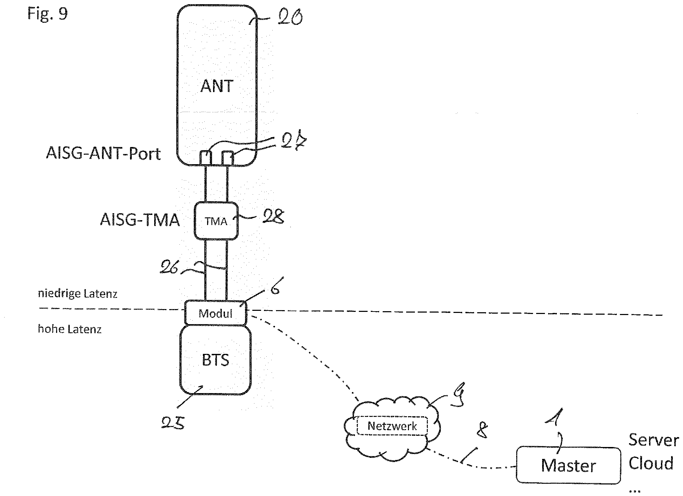

Fig. 9 zeigt dabei ein solches Ausführungsbeispiel der vorliegenden Erfindung, welches in seinem Grundaufbau im Wesentlich dem rechts in Fig. 7 dargestellten Ausführungsbeispiel entspricht. Dabei ist die Antenne 20 über die Hochfrequenzleitung 26 mit der Mobilfunkbasisstation 25 verbunden. Die Antenne 20 weist einen oder mehrere AISG-Ports 27 auf, welche die AISG Kommunikation mit der Antennensteuerung sicherstellen. Weiterhin ist in den Hochfrequenzsignalleitungen 26 zwischen der Basisstation 25 und der Antenne 20 ein Verstärker 28 vorgesehen, welcher ebenfalls eine AISG Funktionalität aufweist.

Bei der Antennensteuerung kann es sich insbesondere um eine RET handeln. Gegebenenfalls kann die Antennensteuerung auch Antennendaten versenden und/oder Daten von Sensoren, welche im Bereich der Antenne angeordnet sind, auslesen und versenden.

Erfindungsgemäß ist nun ein Kommunikationsmodul 6 entweder in die Basisstation 25 integriert, oder greift an den Hochfrequenzleitungen 26 an. Das Kommunikationsmodul 6 leitet, wie oben beschrieben, die AISG-Kommunikation zwischen Master und der Antennensteuerung der Antenne 25 und/oder dem Verstärker 28 transparent weiter. Im Ausführungsbeispiel erfolgt dies über die HF-Leitungen.

Weiterhin kommuniziert das Kommunikationsmodul 6 über ein Netzwerk 9 mit dem Master 1, welcher beispielsweise über eine Server Cloud als virtuelles Steuergerät implementiert wird. Die Kommunikation zwischen dem Modul 6 und dem Master 1 könnte in einer möglichen Ausgestaltung beispielsweise über eine drahtlose Mobilfunkverbindung erfolgen.

Im Folgenden werden nun Ausführungsbeispiele für die Kommunikation zwischen dem Master 1, dem Modul 6 und dem Verstärker 28 bzw. der Antennensteuerung als Slave gezeigt. Die dort gezeigte Kommunikation ist dabei unabhängig von den in Fig. 9 konkret gezeigten Kommunikationsverbindungen.

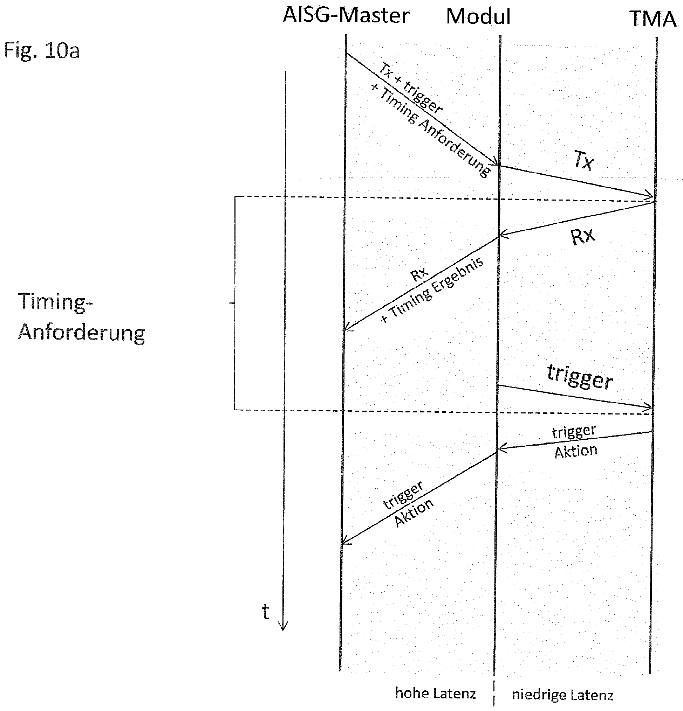

Fig. 10a zeigt nun ein Beispiel für die Kommunikation zwischen dem AISG Master 1, dem Kommunikationsmodul 6 und dem beispielhaft für den Slave stehenden Verstärker 28.

Der Request vom Master zum Kommunikationsmodul umfasst zwei für den Slave bestimmte Steuerbefehle "Tx" sowie "Trigger", sowie eine Timing-Anforderung. Das Kommunikationsmodul leitet nach Erhalt des Requests zunächst den ersten Steuerbefehl Tx an den Slave weiter, welcher darauf mit einer Antwort Rx antwortet. Diese wird vom Kommunikationsmodul zusammen mit Timing-Informationen zur Kommunikation zwischen Modul und Slave an den AISG-Master weitergeleitet. Weiterhin wird das im Request ebenfalls enthaltene Trigger-Signal gemäß der Timing-Anforderung von dem Kommunikationsmodul an den Slave übertragen. Die Timing-Anforderung betrifft dabei den Zeitraum zwischen dem Empfang des ersten Steuerbefehls Tx beim Slave und dem Empfang des Trigger-Signals beim Slave. Das Kommunikationsmodul stellt dabei selbsttätig sicher, dass die Timing-Anforderung eingehalten wird, indem das Trigger-Signal rechtzeitig abgesetzt wird. Dabei kann das Kommunikationsmodul die Zeit für die Kommunikation mit dem Slave auswerten und die Steuerbefehle gemäß der Timing-Anforderung absetzten.

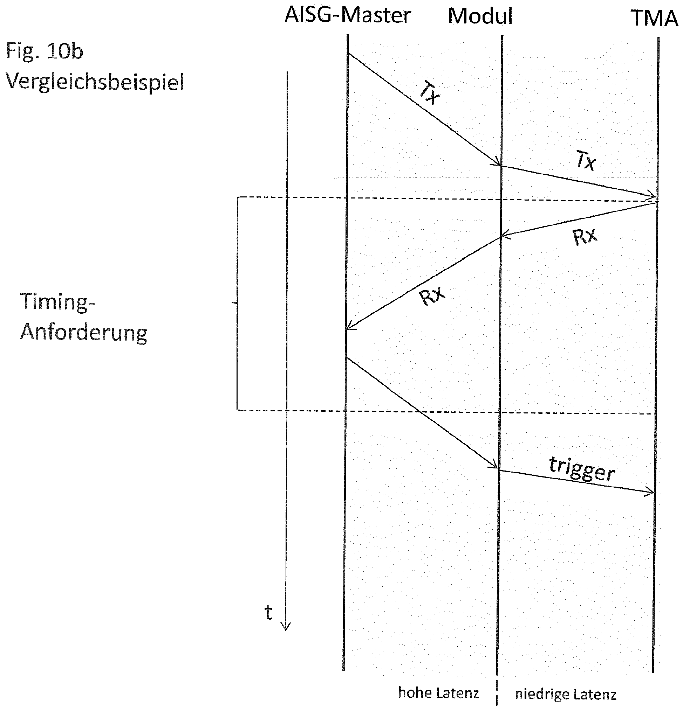

Fig. 10b zeigt ein Vergleichsbeispiel, welches die zeitlichen Abläufe für den Fall verdeutlicht, dass das Kommunikationsmodul keine erfindungsgemäßen Sequenzen unterstützt und somit alle Datenpakete einzeln vom AISG-Master in einzelnen Requests gesendet werden müssen. Der AISG-Master sendet dabei einzelne Datenpakete an das Modul, welches diese an die AISG-Slaves sendet. In diesem Beispiel sollten die Datenpakete Tx₁ und "Trigger" innerhalb einer bestimmten Zeit an den Slave kommuniziert werden, was jedoch in diesem Fall auf Grund der hohen Latenzen nicht möglich ist.

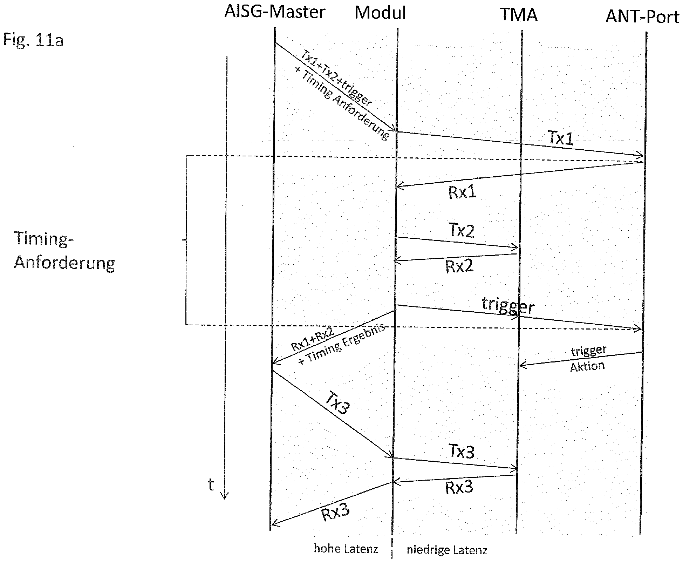

Fig. 11a zeigt wiederrum den Ablauf einer Kommunikation gemäß der vorliegenden Erfindung, wobei die Kommunikation dem in Fig. 8 dargestellten Ablauf gemäß dem Stand der Technik entspricht. Der AISG-Master sendet dabei in einem Request drei Datenpakete und die Timing-Anforderung an das Kommunikationsmodul, welches diese in der vorgegebenen zeitlichen Abfolge an die zwei unterschiedlichen Slaves sendet. Dabei müssen die Datenpakete Tx₁ und Trigger innerhalb einer bestimmten Zeit an den Antennenport kommuniziert werden. Die Übertragung der Timing-Anforderung an das Kommunikationsmodul und die Umsetzung der Timing-Anforderung durch das Kommunikationsmodul sowie die direkte Verbindung zwischen den Kommunikationsmodul und den AISG-Slaves ermöglicht das Einhalten der hohen Latenzanforderungen an die Kommunikation mit den Slaves, und damit die Einhaltung der Timing-Anforderung. Die Latenzen in der Kommunikation zwischen dem örtlich abgesetzten AISG-Master und dem lokal angeordneten Kommunikationsmodul haben dagegen keinen Einfluss auf die Einhaltung der Timing-Anforderung.

Bei dem in Fig. 11a dargestellten Ausführungsbeispiel wird nach dem Absetzten des Trigger-Signals und damit dem Abarbeiten des Requests ein Response an den AISG-Master gesandt, welcher die beiden Antworten Rx₁ und Rx₂ der beiden Slaves sowie die zugehörigen Timing-Informationen umfasst. Danach folgen ein weiterer Request des AISG-Masters, welcher jedoch lediglich das für den Slave TMA bestimmte Datenpaket Tx₃ umfasst, und keine Timing-Anforderung.

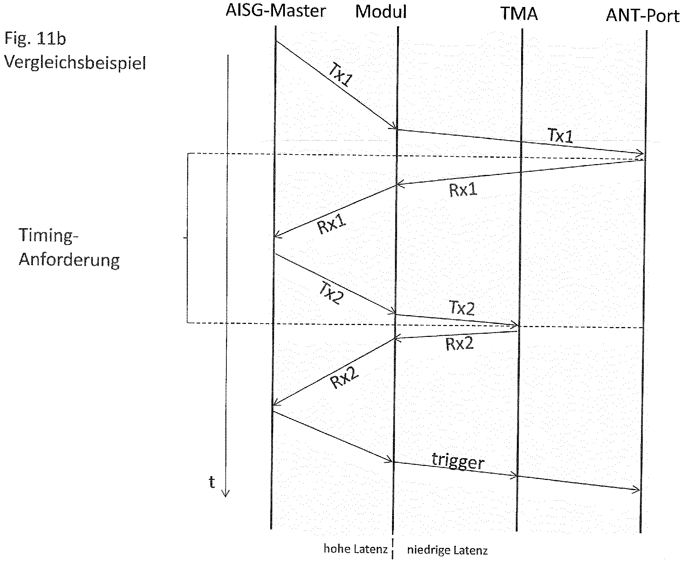

Fig. 11b zeigt wiederrum ein Vergleichsbeispiel, welches den zeitlichen Ablauf verdeutlicht, wenn das Modul keine Sequenzen unterstützt und somit alle Datenpakete einzeln von dem AISG-Master gesendet werden. Auch hier kann die Timing-Anforderung auf Grund der hohen Latenzen zwischen dem Master und dem Modul nicht eingehalten werden.

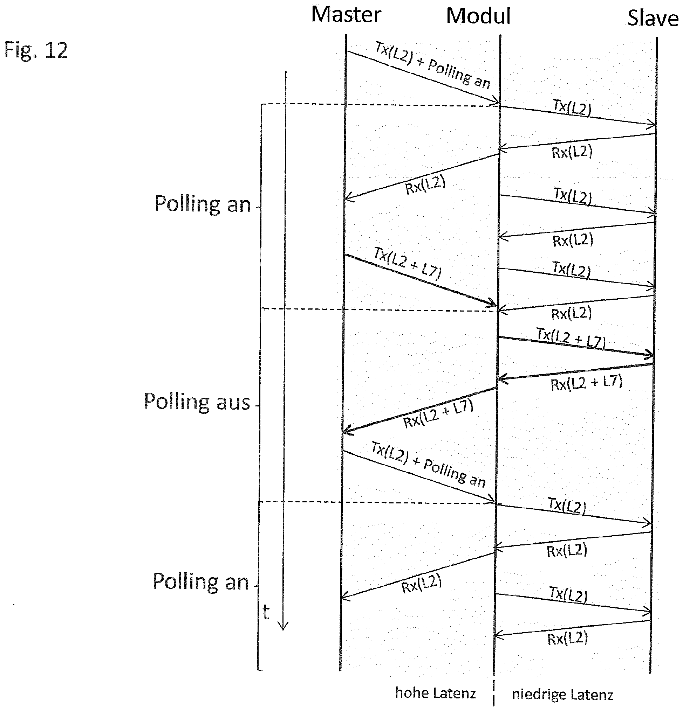

Anhand von Fig. 12 bis 15 wird nun eine weitere Funktionalität eines erfindungsgemäßen Steuerungssystems gemäß einem dritten Aspekt der Erfindung beschrieben, welche wiederrum bei beliebigen Anwendungen, bevorzugt aber wie oben für den ersten und zweiten Aspekt beschrieben bei der Ansteuerung von Antennenkomponenten zum Einsatz kommen kann.

Bei den meisten Kommunikationsprotokollen werden zwischen dem Steuergerät und dem Endgerät neben den eigentlichen Steuerbefehlen gegebenenfalls auch regelmäßig sogenannte Polling-Datenpakete übertragen. Diese Polling-Datenpakete enthalten üblicherweise keine Nutzdaten. Vielmehr werden mit diesen Datenpaketen die Endgeräte im Soll-Betriebsmodus gehalten und den Endgeräten die Möglichkeit gegeben, z.B. Status- bzw. Alarmmeldungen als Antwort auf ein Polling-Datenpaket an dem Master zu senden.

Gemäß einem dritten Aspekt der vorliegenden Erfindung kann diese Polling-Funktion von dem Steuergerät, d.h. dem Master, auf das Kommunikationsmodul übertragen werden. Hierdurch kann das Datenvolumen der Kommunikation zwischen dem Master und dem Kommunikationsmodul so gering wie möglich gehalten werden. Dies ist insbesondere bei Datenverbindungen, deren Betriebskosten über das Datenvolumen skalieren, relevant.

Das erfindungsgemäße Kommunikationsmodul weist hierfür einen Polling-Modus auf, in welchem es in vorbestimmten Zeitabständen eigenständig und ohne Anforderung durch einen Request des Masters Polling-Befehle an die angeschlossenen Slaves versendet.

Dabei werden über das Polling die Slaves im Soll-Betriebsmodus gehalten und es wird diesen die Möglichkeit gegeben, Status- und/oder Alarmmeldungen als Antwort auf ein Polling-Frame zu senden. Wird keine Status- und/oder Alarmmeldung versandt, antworten die Slaves mit einer Polling-Antwort ohne Nutzinhalt. Erhalten die Slaves über einen bestimmten Zeitraum keinen Polling-Befehl, schalten diese ggf. in einen Grundmodus und/oder verlieren ihre Adressierung.

Weiterhin ist in allen Ausführungsbeispielen vorgesehen, dass das Kommunikationsmodul nicht sämtliche Polling-Antworten des Slaves an den Master zurücksendet, sondern lediglich die erste Polling-Antwort auf den ersten Polling-Befehl. Hierdurch wird das Datenvolumen nochmals reduziert. Status- und/oder Alarmmeldungen als Antwort auf einen Polling-Befehl werden dagegen immer an den Master weiter geleitet.

Bei dem erfindungsgemäßen Ausführungsbeispiel erfolgt das Polling über den OSI-Layer 2 (L2). Die Polling-Befehle und die Polling-Antworten werden daher über den Layer 2 kommuniziert. Eigentliche Steuerbefehle und deren Beantwortung werden dagegen über den OSI-Layer 7 (L7) kommuniziert. Daher werden auch Status- und Alarmmeldungen der Slaves, welche als Antwort auf einen Polling-Befehl ausgesandt werden, ebenfalls über den Layer 7 kommuniziert.

Der Polling-Modus kann dabei bevorzugt vom Master gestartet werden. Für das Beenden des Polling-Modus des Kommunikationsmoduls stehen unterschiedliche Ausgestaltungen zur Verfügung, welche im Folgenden näher beschrieben werden.

Bei sämtlichen Ausführungsbeispielen ist dabei ein Befehl "Polling" vorgesehen, über welchen der Master den Polling-Modus des Kommunikationsmoduls einschaltet. Dieser kann beispielsweise zusammen mit einem Polling-Befehl in einem Request übertragen werden.

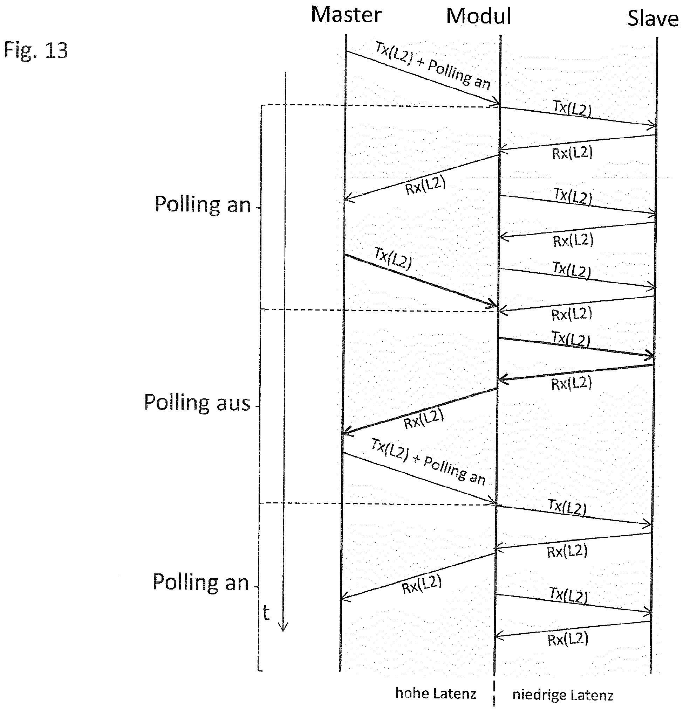

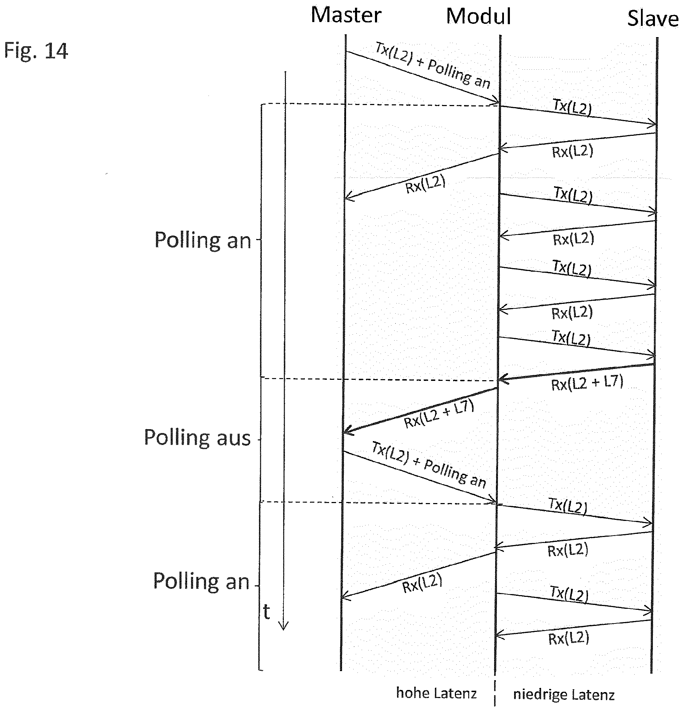

Das Abschalten des Polling-Modus des Kommunikationsmoduls erfolgt in Fig. 12 dadurch, dass von dem Master ein für den Slave bestimmter Steuerbefehl auf dem Layer 7 übertragen wird. Bei dem Ausführungsbeispiel in Fig. 13 erfolgt das Ausschalten dadurch, dass der Master einen weiteren Polling-Befehl über den Layer 2 aussendet. Bei dem Ausführungsbeispiel in Fig. 14 hat auch der Slave die Möglichkeit, das Polling auszuschalten. Insbesondere schaltet das Kommunikationsmodul den Polling-Modus-aus, wenn es von dem Slave eine Antwort über den Layer 7 erhält, d.h. eine Status- oder Alarmmeldung. Das Ausschalten des Polling-Modus erfolgt in diesen Varianten daher über zwischen dem Master und dem Slave ausgetauschte Steuerbefehle bzw. Antworten, welche zusätzlich vom Kommunikationsmodul als ein Ausschalt-Signal verstanden werden.

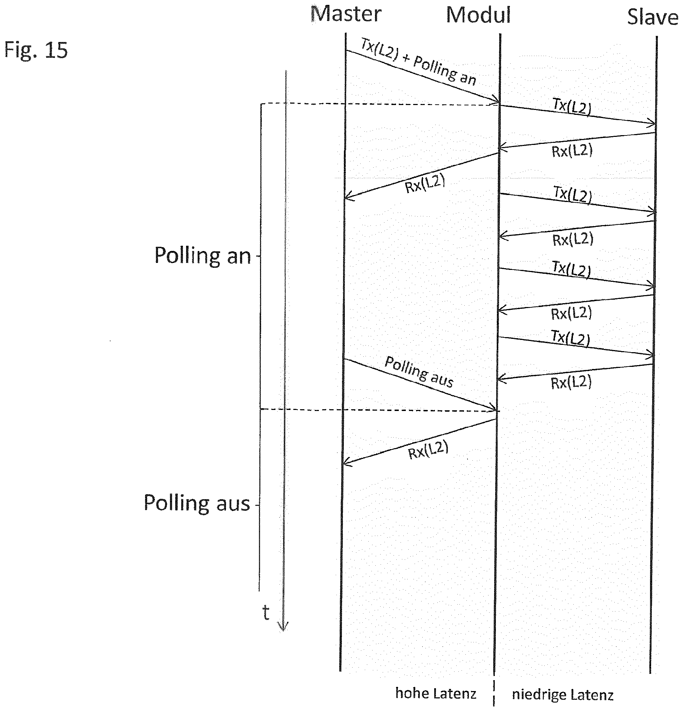

Bei dem in Fig. 15 dargestellten Ausführungsbeispiel ist zum Ausschalten des Polling-Modus dagegen ein explizites Kommando "Polling aus" vorgesehen, welches vom Master an das Modul gesandt wird.

In einer möglichen Ausgestaltung der vorliegenden Erfindung können auch mehrere oder alle der oben genannten Ansteuerungsmöglichkeiten für das Polling vorgesehen sein. Insbesondre kann das Kommunikationsmodul den Polling-Modus dabei ausschalten, wenn es entweder einen weiteren Polling-Befehl über den Layer 2 oder ein Kommando über den Layer 7 von dem Master erhält, welche an den Slave weitergeleitet werden, oder ein explizites Polling-aus Kommando vom Master, oder wenn der Slave eine Antwort über den Layer 7 zurücksendet, d.h. eine Status- oder Alarmmeldung.

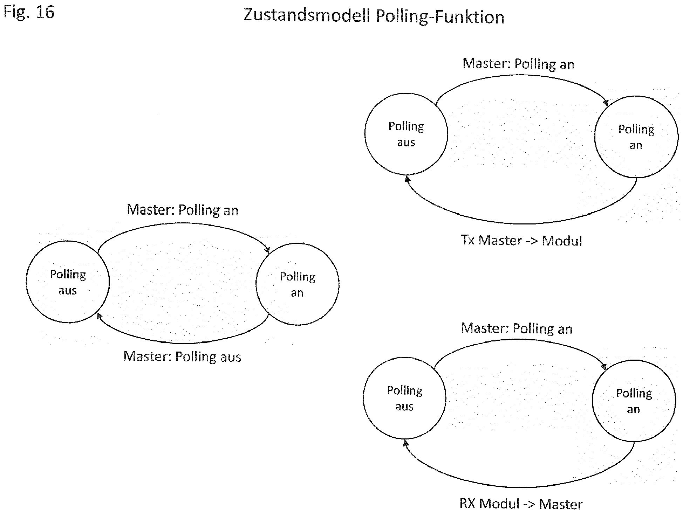

In Fig. 16 sind entsprechende Zustandsmodelle dargestellt.

In einer alternativen Ausführungsform wäre es ebenfalls denkbar, dass der Polling-Betriebsmodus des Kommunikationsmoduls beispielsweise durch das Versenden eines Polling-Befehls durch den Master jeweils ein- bzw. ausgeschaltet werden kann. In diesem Fall wäre auch kein separates Kommando für das Einschalten des Polling-Modus notwendig.

Der dritte Aspekt der vorliegenden Erfindung kann sowohl allein, als auch in Kombination mit dem ersten und/oder zweiten Aspekt verwirklicht sein.

Das Kommunikationsmodul stellt gemäß allen Aspekten der vorliegenden Erfindung die Gegenstelle zum als Master arbeitenden Steuergerät dar und kann eine oder mehrere Software- und/oder Hardware-Kommunikationsschnittstellen zu möglichen Endgeräten zur Verfügung stellen. Bei den Kommunikationsschnittstellen kann es sich dabei beispielsweise um einen UNIX-Domain-Socket, um eine Netzwerkschnittstelle (LAN), und einen AISG-Connector, um einen WiFi-AP und/oder ein Koaxialanschluss handeln.

Aus Sicht der Endgeräte ist das Modul transparent. Dies hat den Vorteil, dass bestehende Endgeräte ohne Anpassung durch das erfindungsgemäße Verfahren mittels eines abgesetzten Steuergerätes und dem Kommunikationsmodul betrieben werden können.

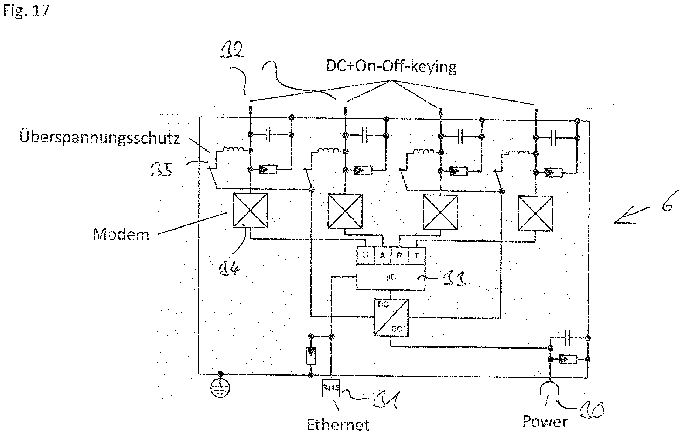

In Fig. 17 ist ein Schaltplan eines möglichen Ausführungsbeispiels eines Kommunikationsmoduls gemäß der vorliegenden Erfindung gezeigt. Das Kommunikationsmodul 6 weist zunächst eine Spannungsversorgung 30 auf. Weiterhin ist ein Ethernet-Anschluss 31 vorgesehen, welcher der Kommunikation mit dem abgesetzten Steuergerät dient. Zur Kommunikation mit den Endgeräten weist das Kommunikationsmodul mehrere Schnittstellen 32 auf, im Ausführungsbeispiel vier Schnittstellen zur separaten Kommunikation mit beispielsweise vier Endgeräten. Die Kommunikation erfolgt dabei über Modems 34, die den einzelnen Schnittstellen zugeordnet sind. Die Steuerung des Kommunikationsmoduls erfolgt über einen Mikrokontroller 33 mit entsprechender Software. Im Ausführungsbeispiel erfolgt die Kommunikation mit den Endgeräten über on-off-keying, welches einer Gleichspannung überlagert ist. Weiterhin ist ein Überspannungsschutz 35 vorgesehen. Bei den Schnittstellen zu den Endgeräten handelt es sich um serielle UART-Schnittstellen.

Sind alle drei Aspekte verwirklicht, nimmt das Kommunikationsmodul die Parameter und die Informationen des Steuergerätes entgegen, kommuniziert gemäß der ihm zur Verfügung gestellten Timing-Anforderungen die Parameter und Informationen an die Endgeräte, ermittelt das Timing dieser Kommunikation zwischen Modul und den Endgeräten und kann die Polling-Funktion des Steuergerätes übernehmen. Das Ergebnis der Kommunikation, inklusive ermittelter Timing-Werte, wird an das Steuergerät kommuniziert.

Die vorliegende Erfindung hat insbesondere folgende Vorteile:
- Der Einfluss von Netzwerk- und Medium-gegebenen Latenzen wird weitgehend eliminiert.
- Steuergeräte, fernab der Endgeräte, können in zentralen (virtuellen) Servern abgebildet werden.
- Das Verfahren, inklusive Steuergerät und Modul, ist aus Sicht der Endgeräte transparent, wodurch diese nicht verändert bzw. angepasst werden müssen.
- Datenvolumina zwischen Steuergerät und Modul können deutlich reduziert werden (Polling-Funktion wird vom Endgerät auf Modul übertragen), wodurch beispielsweise im Falle der Nutzung einer kostenpflichtigen Mobilfunkverbindung diese Kosten deutlich reduziert werden können.
- Alle Vorteile, welche sich durch den Einsatz von Server-Technologien ergeben (Skalierbarkeit, Wartung, Überwachung, Backup&Restore, geringere Kosten bzw. geringere Komplexität für Gerätschaften).

## Patentansprüche

1. Steuerungssystem mit einem Master, mindestens einem Slave und einem zwischen dem Master und dem mindestens einen Slave angeordneten Kommunikationsmodul, über welches der Master und der mindestens eine Slave kommunizieren, wobei der Master Steuerbefehle zum Ansteuern des mindestens einen Slave versendet und der mindestens eine Slave auf die Steuerbefehle des Master antwortet, wobei das Kommunikationsmodul die Steuerbefehle und die Antworten jeweils weiterleitet,
**dadurch gekennzeichnet**,
wobei der Master an das Kommunikationsmodul in einem oder mehreren Requests mindestens einen Steuerbefehl und mindestens eine zugehörige Timing-Anforderung übermittelt, wobei das Kommunikationsmodul den oder die mehreren Requests verarbeitet, indem es den mindestens einen Steuerbefehl gemäß der mindestens einen Timing-Anforderung an den mindestens einen Slave weiterleitet, und/oder dass das Kommunikationsmodul Timing-Informationen bezüglich der Kommunikation mit dem mindestens einen Slave aufnimmt und an den Master sendet.

2. Steuerungssystem nach Anspruch 1, wobei das Kommunikationsmodul mit dem mindestens einen Slave über eine Kommunikationsverbindung mit einer niedrigeren und/oder definierten Latenz in Verbindung steht und wobei der Master mit dem Kommunikationsmodul über eine Kommunikationsverbindung mit einer höheren und/oder undefinierten Latenz in Verbindung steht, und/oder wobei der Master mit dem Kommunikationsmodul über ein Netzwerk kommuniziert.

3. Steuerungssystem nach Anspruch 1 oder 2, wobei der Master in einem oder mehreren Requests mindestens zwei Steuerbefehle und mindestens eine zugehörige Timing-Anforderung an das Kommunikationsmodul versendet, wobei das Kommunikationsmodul die beiden Steuerbefehle nacheinander gemäß der Timing-Anforderung an mindestens einen Slave sendet, wobei das Kommunikationsmodul bevorzugt die beiden Steuerbefehle nacheinander mit einem der Timing-Anforderung entsprechenden zeitlichen Abstand und/oder in einer der Timing-Anforderung entsprechenden zeitlichen Abfolge und/oder aufgrund einer der Timing-Anforderung entsprechenden Bedingung an mindestens einen Slave sendet.

4. Steuerungssystem nach Anspruch 3, wobei der Request oder die mehreren Requests einen ersten Steuerbefehl an einen ersten Slave, einen zweiten Steuerbefehl an einen zweiten Slave und die Timing-Anforderung umfasst oder umfassen, wobei das Kommunikationsmodul nach Erhalt des Requests oder mindestens eines und bvorzugt aller der mehreren Requests den ersten Steuerbefehl an den ersten Slave versendet und nach einer der Timing-Anforderung entsprechenden Zeitspanne den zweiten Steuerbefehl an den zweiten Slave sendet.

5. Steuerungssystem nach einem der vorangegangenen Ansprüche, wobei die Timing-Anforderung den zeitlichen Abstand zwischen dem Versenden zweier Steuerbefehle durch das Kommunikationsmodul und/oder den zeitlichen Abstand zwischen dem Erhalt einer Antwort von einem Slave und dem Versenden eines Steuerbefehls durch das Kommunikationsmodul betrifft.

6. Steuerungssystem nach einem der vorangegangenen Ansprüche, wobei das Kommunikationsmodul die Zeitdifferenz zwischen dem Versenden eines Steuerbefehls an einen Slave und der Erhalt einer Antwort bestimmt und an den Master sendet, und/oder wobei das Kommunikationsmodul die Sendezeit beim Versenden eines Steuerbefehls an einen Slave und/oder die Empfangszeit einer Antwort bestimmt und an den Master sendet, und/oder wobei das Kommunikationsmodul die Timing-Information und insbesondere die Zeitdifferenz, Sendezeit und/oder Empfangszeit zusammen mit der Antwort des Slave an den Master sendet.

7. Steuerungssystem nach einem der vorangegangenen Ansprüche, wobei das Kommunikationsmodul den Erhalt eines Requests und/oder mehrerer Requests und/oder eines Steuerbefehls des Masters durch Versenden eines Acknowledge-Signals bestätigt.

8. Steuerungssystem nach einem der vorangegangenen Ansprüche, wobei das Kommunikationsmodul mehrere Antworten mindestens eines Slaves gemeinsam an den Master sendet, wobei das Kommunikationsmodul die Antworten bevorzugt zusammen mit mindestens einer Timing-Information versendet, und/oder wobei das Kommunikationsmodul mehrere Antworten mindestens eines Slaves jeweils einzeln an den Master sendet, wobei das Kommunikationsmodul die Antworten jeweils bevorzugt zusammen mit mindestens einer Timing-Information versendet.

9. Steuerungssystem insbesondere nach einem der vorangegangenen Ansprüche, mindestens einem Slave und einem zwischen dem Master und dem mindestens einen Slave angeordneten Kommunikationsmodul, über welches der Master und der mindestens eine Slave kommunizieren, wobei der Master Steuerbefehle zum Ansteuern des mindestens einen Slave versendet und der mindestens eine Slave auf die Steuerbefehle des Master antwortet, wobei das Kommunikationsmodul die Steuerbefehle und die Antworten jeweils weiterleitet, **dadurch gekennzeichnet,**
**dass** das Kommunikationsmodul einen Polling-Modus aufweist, in welchem es in vorbestimmten Zeitabständen eigenständig und ohne Anforderung durch einen Request des Masters Polling-Befehle an den mindestens einen Slave versendet, wobei bevorzugt nicht jede Polling-Antwort eines Slaves auf einen Polling-Befehl an den Master weitergeleitet wird, wobei insbesondere nur die Polling-Antwort eines Slave auf einen ersten oder letzten Polling-Befehl an den Master weitergeleitet wird, und/oder wobei der Master und/oder der mindestens eine Slave bevorzugt den Polling-Modus durch das Versenden eines Requests und/oder eines Steuerbefehls und/oder einer Antwort einschalten und/oder ausschalten können.

10. Steuerungssystem nach einem der vorangegangenen Ansprüche, wobei das Kommunikationsmodul die in einem oder mehreren Requests enthaltenen Steuerbefehle und/oder die Antworten, im Hinblick auf ihre Informationsstruktur und ihren Informationsgehalt, identisch weiterleitet, wobei das Kommunikationsmodul die in einem oder mehreren Requests enthalten Steuerbefehle und/oder die Antworten gegebenenfalls über eine andere Bitübertragungsschicht überträgt, und/oder wobei die Kommunikation zwischen dem Kommunikationsgerät und dem Master bevorzugt über ein Internet-Protokoll erfolgt.

11. Steuerungssystem nach einem der vorangegangenen Ansprüche, wobei es sich bei dem Slave um eine Steuerungskomponente eines Kommunikationssystems handelt, insbesondere einer Mobilfunkantenne, insbesondere zum Betrieb an einer Mobilfunkbasisstation, wobei es sich bei dem Slave bevorzugt um ein Antenna Line Device, insbesondere um eine Antennensteuerung insbesondere zur Ansteuerung der Ausrichtung der Antenne und/oder um einen Verstärker, handelt, und/oder wobei bevorzugt das Kommunikationsmodul in der Basisstation integriert ist und/oder wobei bevorzugt das Kommunikationsmodul über die HF-Signalleitungen mit der Steuerungskomponente kommuniziert, und/oder wobei bevorzugt die Kommunikation zwischen dem Master und dem Slave gemäß dem AISG Standard erfolgt und/oder die Steuerbefehle und/oder Antworten dem AISG-Standard entsprechen.

12. Steuerungssystem nach einem der vorangegangenen Ansprüche, wobei es sich bei dem Slave um eine Steuerungskomponente eines Satellitenreceivers und/oder einer Satellitenantenne handelt.

13. Steuerungssystem nach einem der vorangegangenen Ansprüche, zur Ansteuerung eines Kommunikationssystems, welches eine Vielzahl von entfernt voneinander angeordneten Slaves umfasst, wobei die Steuerung des Kommunikationssystems zentral erfolgt, indem zentral angeordnete Master mit Slaves über jeweils im Bereich der Slaves angeordnete Kommunikationsmodule kommunizieren.

14. Kommunikationsmodul insbesondere für ein Steuerungssystem nach einem der vorangegangenen Ansprüche, wobei das Kommunikationsmodul zwischen einem Master und mindestens einem Slave anordenbar ist und Steuerbefehle des Masters zum Slave und Antworten des Slave zum Master weiterleitet,
**dadurch gekennzeichnet,**
**dass** das Kommunikationsmodul einen oder mehrere Requests des Masters, mit welchem oder mit welchen der Master mindestens einen Steuerbefehl und eine zugehörige Timing-Anforderung an das Kommunikationsmodul übermittelt, verarbeitet, indem es den mindestens einen Steuerbefehl gemäß der mindestens einen Timing-Anforderung an den mindestens einen Slave sendet, und/oder dass das Kommunikationsmodul Timing-Informationen bezüglich der Kommunikation mit dem mindestens einen Slave aufnimmt und an den Master sendet und/oder dass das Kommunikationsmodul einen Polling-Modus aufweist, in welchem es in vorbestimmten Zeitabständen eigenständig und ohne Anforderung durch einen Request des Masters Polling-Befehle an den mindestens einen Slave versendet.

15. Verfahren zur Ansteuerung mindestens eines Slaves über einen Master, insbesondere zum Betrieb eines Steuerungssystems nach einem der vorangegangenen Ansprüche, wobei zwischen dem Master und dem mindestens einen Slave ein Kommunikationsmodul angeordnet ist, über welches der Master und der mindestens eine Slave kommunizieren, wobei der Master Steuerbefehle zum Ansteuern des mindestens einen Slave versendet und der mindestens eine Slave auf die Steuerbefehle des Master antwortet, wobei das Kommunikationsmodul die Steuerbefehle und die Antworten jeweils weiterleitet,
**dadurch gekennzeichnet,**
**dass** der Master an das Kommunikationsmodul in einem oder mehreren Requests mindestens einen Steuerbefehl und eine zugehörige Timing-Anforderung übermittelt, wobei das Kommunikationsmodul den oder die mehreren Requests verarbeitet, indem es den mindestens einen Steuerbefehl gemäß der mindestens einen Timing-Anforderung an den mindestens einen Slave sendet, und/oder dass das Kommunikationsmodul Timing-Informationen bezüglich der Kommunikation mit dem mindestens einen Slave aufnimmt und an den Master sendet und/oder dass das Kommunikationsmodul in einem Polling-Modus in vorbestimmten Zeitabständen eigenständig und ohne Anforderung durch einen Request des Masters Polling-Befehle an den mindestens einen Slave versendet.
